(19) Europäisches Patentamt
European Patent Office
Office européen des brevets

(11) **EP 3 152 831 B1**

(12) **EUROPÄISCHE PATENTSCHRIFT**

(45) Veröffentlichungstag und Bekanntmachung des Hinweises auf die Patenterteilung:
**16.11.2022   Patentblatt 2022/46**

(21) Anmeldenummer: **15726914.3**

(22) Anmeldetag: **27.05.2015**

(51) Internationale Patentklassifikation (IPC):
**H02P 29/032** (2016.01)   **F02B 37/18** (2006.01)
**H02P 21/00** (2016.01)   **H02P 3/02** (2006.01)
**F02D 11/10** (2006.01)   **F02D 41/00** (2006.01)

(52) Gemeinsame Patentklassifikation (CPC):
**H02P 21/00; F02D 11/107; H02P 29/032;**
F02B 37/186; F02D 41/0077; F02M 26/54;
G05B 2219/41321; H02P 3/025

(86) Internationale Anmeldenummer:
**PCT/EP2015/061688**

(87) Internationale Veröffentlichungsnummer:
**WO 2015/185410 (10.12.2015 Gazette 2015/49)**

(54) **VERFAHREN UND VORRICHTUNG ZUM VERSTELLEN EINES STELLGLIEDS EINES STELLGEBERSYSTEMS MIT EINEM ELEKTRONISCH KOMMUTIERTEN STELLANTRIEB**

METHOD AND DEVICE FOR ADJUSTING AN ACTUATOR OF A POSITIONING SYSTEM WITH AN ELECTRONICALLY COMMUTATED ACTUATOR DRIVE

PROCÉDÉ ET DISPOSITIF DE DÉPLACEMENT D'UN ORGANE DE RÉGLAGE D'UN SYSTÈME D'ACTIONNEUR ÉQUIPÉ D'UN SERVOMOTEUR À COMMUTATION ÉLECTRONIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.06.2014   DE 102014210930**

(43) Veröffentlichungstag der Anmeldung:
**12.04.2017   Patentblatt 2017/15**

(73) Patentinhaber: **Robert Bosch GmbH**
**70442 Stuttgart (DE)**

(72) Erfinder:
• **GROSSMANN, Alex**
**71229 Leonberg (DE)**
• **SCHWEINFURTH, Reiner**
**75031 Eppingen (DE)**
• **DIEROLF, Simon**
**73230 Kirchheim/Teck (DE)**
• **KILGER, Michael**
**93326 Abensberg (DE)**
• **IMMDENDOERFER, Ingo**
**71732 Tamm (DE)**
• **SIEBER, Udo**
**74321 Bietigheim (DE)**

(74) Vertreter: **Qip Patentanwälte**
**Dr. Kuehn & Partner mbB**
**Goethestraße 8**
**80336 München (DE)**

(56) Entgegenhaltungen:
**EP-A2- 1 555 748**       **DE-A1-102011 005 774**
**DE-A1-102011 118 172**   **DE-T5- 10 197 212**

**Beschreibung**

Stand der Technik

Zur Ansteuerung von mechanischen Aktuatoren, können bürstenlose Elektromotoren eingesetzt werden. Ein Beispiel hierfür ist der Einsatz eines bürstenlosen Gleichstrommotors (BLDC) bzw. eines elektronisch kommutierten Stellantriebs, welcher Vorteile gegenüber einem herkömmlichen mechanisch kommutierten DC-Motor mit sich bringt. Hierunter fallen zum Beispiel ein verbessertes EMV-Verhalten, geringere Reibung, sowie reduzierter Bauraum und geringeres Gewicht. Im Allgemeinen ist ein derartiger Motor über ein Getriebe mit dem eigentlichen Stellorgan bzw. Stellglied verbunden. Üblicherweise wird für die Kommutierung eines BLDC-Motors zu jedem Zeitpunkt eine Information über dessen Rotorlage benötigt. Dazu wird die Rotorlage häufig durch eine Rotorlage-Sensorik direkt an der Motorwelle erfasst. Alternativ kann dank der mechanischen Kopplung zwischen Motor und Stellorgan bzw. Stellglied die Rotorlage auch indirekt mittels eines Lagesensors am Stellglied ermittelt werden. Ein derartiges Stellgebersystem ist beispielsweise in der DE 10 2011 005 566 A1 beschrieben.

EP 1 555 748 A2 beschreibt ein Verfahren zur Erkennung eines Winkelunterschiedes und eine Vorrichtung zur Regelung eines Synchronmotors. DE 101 97 212 T5 beschreibt ein Motorsteuerungssystem für einen dreiphasigen Permanentmagnetmotor. DE 10 2011 005774 A1 beschreibt die Ansteuerung von elektronisch kommutierten elektrischen Maschinen, insbesondere Maßnahmen zur Adaption des Voreilwinkels zwischen einem an einem Läufer der elektrischen Maschine erzeugten Erregerfeld und einem durch die Kommutierung der Statorspulen erzeugten Motormagnetfeld.

DE 10 2011 118172 A1 beschreibt ein Verfahren und einen Rechnerverbund zur Steuerung eines Elektromotors.

Offenbarung der Erfindung

Die Erfindung geht aus von der Erkenntnis, dass der Bedarf bestehen kann, ein über einen BLDC-Motor angetriebenes Stellglied auch ohne kontinuierliche Ermittlung der Rotorlage zuverlässig und zielgenau verstellen zu können. Auf diese Weise können teure Sensoren im Stellgebersystem eingespart werden und der Bauraum für ein derartiges Stellgebersystem kann verringert werden.

Es kann auch der Bedarf bestehen, ein Stellgebersystem zu schaffen, bei dem zwar Sensoren zur Ermittlung der Rotorlage vorgesehen sind, welches es jedoch ermöglicht, auch bei Ausfall der Lageermittlung das Stellglied zuverlässig und zielgenau verstellen zu können. So kann beispielsweise der Bedarf bestehen, bei Wegfall der Lageinformation das Stellglied dauerhaft zuverlässig in jede beliebige Stellung zu bewegen. Auch kann der Bedarf bestehen, nach einem Wegfall der Lageinformation das Stellglied lediglich in eine Notstellung zu bewegen, wobei es möglich ist, dass die Notstellung nur unter Überwindung einer Gegenkraft, beispielsweise einer Federkraft erreicht werden kann.

Vorteile der Erfindung

Dieser Bedarf kann durch den Gegenstand der vorliegenden Erfindung gemäß den unabhängigen Ansprüchen gedeckt werden. Vorteilhafte Ausführungsformen und Weiterbildungen der vorliegenden Erfindung sind in den abhängigen Ansprüchen beschrieben.

Gemäß einem ersten Aspekt der Erfindung wird dabei ein Verfahren gemäß Anspruch 1 zum Verstellen eines Stellglieds eines Stellgebersystems vorgeschlagen, das es ermöglicht, ein über einen elektronisch kommutierten Stellantrieb bzw. über einen bürstenlosen Gleichstrommotor angetriebenes Stellglied auch ohne kontinuierliche Ermittlung der Rotorlage zuverlässig und zielgenau verstellen zu können.

Dies wird dadurch bewirkt, dass das Stellgebersystem einen elektrisch kommutierten Stellantrieb bzw. bürstenlosen Gleichstrommotor aufweist, der mit dem Stellglied gekoppelt ist, wobei der Stellantrieb einen permanentmagnetischen Rotor aufweist, wobei der Rotor eine erste Achse aufweist, die sich entlang einer Polachse des Rotors erstreckt und wobei der Stellantrieb einen elektrisch kommutierten Stator aufweist. Der Stator ist mit einem Raumzeiger bestrombar, wobei der Raumzeiger eine elektrische Phase und eine Amplitude aufweist, wobei der Raumzeiger bezüglich der ersten Achse des Rotors um eine Unterschieds-Phasenlage ausgerichtet wird. Das Verfahren weist dabei folgende Schritte zur Ansteuerung einer vordefinierten Stellung des Stellglieds auf:

  ▪ Einstellen der Unterschiedsphasenlage des Raumzeigers auf eine Betriebs-Unterschiedsphasenlage,
  ▪ Einstellen der Amplitude auf eine Betriebs-Amplitude, wobei die Betriebs-Unterschiedsphasenlage und die Betriebs-Amplitude derart eingestellt werden, dass die Betriebs-Unterschiedsphasenlage weniger als 45° beträgt und dass ein zum Anfahren der vordefinierten Stellung des Stellglieds geeignetes auf den Rotor wirkendes Drehmoment erzeugt wird.

Die vordefinierte Stellung des Stellglieds wird durch Drehung der elektrischen Phase des Raumzeigers um einen geeigneten Differenz-Phasenwinkel erreicht.

Das Stellglied kann gegenkraftbeaufschlagt sein, also beispielsweise mit einer Feder versehen sein, die stets ein Gegendrehmoment auf den Stellantrieb ausübt, um das Stellglied in einem stromlosen Zustand des Stellantriebs in eine Ursprung-Lage zu bewegen.

Das Stellgebersystem kann beispielsweise eine Drosselklappe, eine Ansteuerung eines Abgasrückführventils, eine Ladungsbewegungsklappe, ein General-Purpose-Actuator oder ein Scheibenwischermotor sein.

Der Stator kann eine ganzzahliges Polpaarzahl NP aufweisen, beispielsweise NP = 1 oder NP = 2 oder NP = 3 oder auch andere Polpaarzahlen.

Das Stellglied kann über ein Getriebe mit einer Getriebeübersetzung an den Stellantrieb gekoppelt sein. Die Getriebeübersetzung kann beispielsweise 10:1 oder 20:1 oder 40:1 betragen. Jedoch sind auch andere Getriebeübersetzungen zwischen 1:1 bis 500:1 möglich.

Bei einer Getriebeübersetzung von 1:1 und einer Polpaarzahl NP = 1 entspricht somit eine Drehung des Raumzeigers um eine elektrische Phase von 360° genau einer vollen Umdrehung des Stellglieds, also einer Drehung des Stellglieds um einen mechanischen Stellwinkel α ebenfalls von 360°. Bei einer Getriebeübersetzung von 20:1 und einer Polpaarzahl NP = 1 entsprechen 20 volle Umdrehungen des Raumzeigers, also die Drehung der elektrischen Phase um 7200°, genau einer vollen Umdrehung des Stellglieds, also einer Drehung des Stellglieds um einen mechanischen Stellwinkel α von 360°. Bei einer Getriebeübersetzung von 20:1 und einer Polpaarzahl NP = 2 entsprechen 40 volle Umdrehungen des Raumzeigers, also die Drehung der elektrischen Phase um 14400°, genau einer vollen Umdrehung des Stellglieds, also einer Drehung des Stellglieds um 360°.

Gegenüber dem Stand der Technik weist das Verfahren den Vorteil auf, dass das Stellglied zuverlässig in die vordefinierte Stellung bewegt werden kann, ohne dass kontinuierlich die Lage der ersten Achse des Rotors bzw. die Rotorlage bestimmt werden muss. Auf diese Weise kann beispielsweise auf den Einbau von Sensoren zur Ermittlung der Lage in der Stellgebersystem verzichtet werden, wodurch das Stellgebersystem vorteilhaft kompakter gebaut werden kann und billiger hergestellt werden kann.

In anderen Worten ausgedrückt wird darauf verzichtet, den Stellantrieb bzw. Motor wirkungsgradoptimiert zu betreiben. Dies wird gemäß des vorgeschlagenen Verfahrens dadurch erreicht, dass der Raumzeiger nicht mit einer Unterschieds-Phasenlage von ungefähr 90°, dafür aber mit geringstmöglicher Amplitude betrieben wird. Dass also der Raumzeiger nicht ungefähr in Richtung einer zweiten Achse des Rotors ausgerichtet ist, welche quer zur ersten Achse des Rotors verläuft. Dadurch ist der Raumzeiger nicht mit seinem vollen Betrag drehmomentwirksam. Für eine wirkungsgradoptimierte Ausrichtung des Raumzeigers ist die genaue Kenntnis der Lage der ersten Achse notwendig, da eine Unterschieds-Phasenlage von ungefähr 90° einen labilen Zustand darstellt: der Rotor wird durch das vom Raumzeiger verursachte Drehmoment dazu veranlasst, seine erste Achse in Richtung des Raumzeigers auszurichten, also die Unterschieds-Phasenlage zu verringern.

Vielmehr wird der Raumzeiger gemäß des vorgeschlagenen Verfahrens ungefähr in Richtung der ersten Achse des Rotors verdreht und weist somit eine Unterschieds-Phasenlage von weniger als 45°, idealerweise von wenigen Grad, zum Beispiel 5° auf. Gleichzeitig wird die Amplitude des Raumzeigers auf einen Betrag verlängert, der ausreichend ist, um bei der gewählten Betriebs-Unterschiedsphasenlage ein Drehmoment auf den Rotor auszuüben, welches ausreichend ist, um das maximal auftretende, auf den Rotor wirkende Gegendrehmoment zu überwinden, welches auf dem Weg von der Stellung des Stellglieds, bei welchem die Betriebs-Unterschiedsphasenlage eingestellt wird, zur vordefinierten Stellung des Stellglieds auftritt.

Bei der gewählten Betriebs-Unterschiedsphasenlage ist nur noch ein Anteil der Amplitude des Raumzeigers drehmomentwirksam, der in Richtung quer zur ersten Achse des Rotors wirkt, also ein Anteil, der sich aus dem Sinus der Unterschieds-Phasenlage multipliziert mit der Gesamtamplitude ergibt. Somit wird die minimal mögliche Betriebs-Unterschiedsphasenlage bestimmt durch das maximal zu überwindende Gegen-Drehmoment (zum Beispiel durch Reibungskräfte in einem Getriebe, das das Stellglied an den Stellantrieb koppelt oder durch die Beaufschlagung des Stellglieds mit einer Gegenkraft z.B. in Form einer Rückstellfeder) einerseits und die maximal verfügbare Amplitude des Raumzeigers sowie die konstruktiven Auslegung des Rotors (zum Beispiel seine Magnetkraft und seine Länge) und die Getriebeübersetzung andererseits. Die maximal verfügbare Amplitude des Raumzeigers wird beispielsweise durch die konstruktive Auslegung der Stator-Spulen bzw. des Stators, insbesondere durch deren Widerstand, oder durch seine Polzahl bestimmt. Außerdem spielt die zur Verfügung stehende Versorgungsspannung und die Aufbereitung der Phasenspannungen, also die Endstufe der Spannungsversorgung und deren Ansteuerverfahren, eine Rolle für die maximal verfügbare Amplitude. Denn dadurch wird letztlich der maximal erzielbare Stromvektor im Motor beeinflusst.

Das Moment ist (näherungsweise) linear zum Sinus der Unterschieds-Phasenlage. Für eine Unterschiedsphasenlage von 90°, also Sinus(90°), berechnet sich das Drehmoment $T_M$ (näherungsweise) wie folgt:

$$T_M = 3/2 * NP * Km * I,$$

wobei NP die Polpaarzahl, Km die Motorkonstante und I der Betrag des Stromvektors (mit der Unterschieds-Phasenlage 90°) sind.

In der Gleichung kommt je nach Motortyp und der konstruktiven Auslegung von dessen Magnetkreis noch ein weiterer Term hinzu. Dessen Auswirkung auf das Drehmoment hat jedoch in der Regel nur geringe Auswirkungen auf das Drehmoment.

Durch den Verzicht auf eine wirkungsgradoptimierte Unterschieds-Phasenlage folgt der Rotor quasi in einem stabilen Gleichgewicht der Ausrichtung des Raumzeigers und kann auf diese Weise in jede gewünschte Lage gedreht werden, wodurch das an den Rotor gekoppelte Stellglied ebenfalls in jede gewünschte Lage gedreht werden kann. Auf diese Weise ist die genaue Lageinformation des Rotors vorteilhaft nicht mehr erforderlich sondern lediglich ein höherer Wert der Amplitude des Raumzeigers verglichen mit dem Betrieb bei einer wirkungsgradoptimierten Unterschieds-Phasenlage.

Eine Weiterbildung der Erfindung sieht vor, dass im Stellgebersystem Mittel zur Erfassung eines Lagewerts der Lage der ersten Achse des Rotors bzw. der Rotorlage vorgesehen sind. Unter dem Lagewert der Lage der ersten Achse ist dabei die Lage der ersten Achse bezüglich der elektrischen Phase des Raumzeigers zu verstehen. Dadurch wird vorteilhaft bewirkt, dass zumindest zu einem Zeitpunkt, beispielsweise unmittelbar nach der Montage des Rotors im Stellantrieb, oder zu einem beliebigen anderen Zeitpunkt die Lage des Rotors des Stellantriebs erfasst werden kann. Auf diese Weise kann das Verfahren besonders zuverlässig durchgeführt werden.

So kann z.B. bei einem Stellgebersystems mit einer Getriebeübersetzung von 40:1 und einer Polpaarzahl von NP = 1 die Lage der ersten Achse einen Wert zwischen 0° und 14400° (elektrische Phase) annehmen, um eine volle Umdrehung (im realen Raum) des Stellglieds zu beschreiben bzw. einen Wert von z.B. 0° bis 3600° (elektrische Phase), um das Stellglied mechanisch um 90° (im realen Raum) zu verstellen. Es sind also im realen Raum 10 Umdrehungen des Rotors notwendig (bzw. eben 3600° des Raumzeigers 260 im elektrischen Phasenraum), um eine Verdrehung des Stellglieds um 90° im realen Raum zu bewirken. Die von den Mitteln erfasste Lage der ersten Achse des Rotors ist somit in eindeutiger Weise an die Lage des Stellglieds gekoppelt. Wird z.B. ein Lagewert von 1800° erfasst ist somit auch gleichzeitig bekannt, dass das Stellglied bei einem Stellwinkel von 45° steht.

Es kann vorteilhaft sein, den Lagewert der Lage der ersten Achse des Rotors wenigstens zu einem Zeitpunkt genau zu kennen, da es für den Fall, dass eine Getriebeübersetzung ungleich 1:1 bzw. eine Polpaarzahl ungleich NP = 1 vorliegt, zu mehrdeutigen Situationen kommen kann. So zeigt der Raumzeiger bei einer Drehung der elektrischen Phase um jeweils 360° im realen Raum jeweils in dieselbe Raumrichtung. Gemäß dem vorgeschlagenen Verfahren richtet sich der Rotor im realen Raum ungefähr in diese Raumrichtung des Raumzeigers aus. Die genaue Kenntnisse des Lagewerts der Lage des ersten Achse des Rotors bezüglich der elektrischen Phase erlaubt dann die Bestimmung der notwendigen Veränderung der elektrischen Phase des Raumzeigers, um das Stellglied in die vordefinierte Position zu verstellen. Befindet sich das Stellglied z.B. bei einer Stellung von 45° im realen Raum, so sind zum Erreichen einer Stellung von 90° fünf volle Umdrehungen des Rotors (und auch des Raumzeigers) notwendig. Der Raumzeiger bzw. die Lage der ersten Achse befindet sich somit bei einem Lagewert (der elektrischen Phase) von 1800° und soll auf 3600° verstellt werden. Ist die Lage der ersten Achse vollkommen unbekannt, fehlt also in anderen Worten die Kenntnis der elektrischen Phase. Dann kann zwar der Rotor auf den Raumzeiger ausgerichtet werden, es ist aber nicht einfach, zu bestimmen wie viele Umdrehungen des Rotors (bzw. des Raumzeigers) notwendig sind bzw. um welchen Betrag die elektrischen Phase verstellt werden muss, um das Stellglied in die gewünschten Stellung zu bringen. In dem oben aufgeführten Beispiel steht der Raumzeiger z.B. auch nach einer Drehung der elektrischen Phase von 1800° auf einen Wert von 2160° (also um eine Unterschiedsphase von 360°) in derselben Realraumrichtung wie bei dem notwendigen Wert von 3600°. Jedoch hat sich das Stellglied damit nicht um 45° auf 90° bewegt sondern nur um 9° auf 54°. Durch die Mittel zur Ermittlung des Lagewerts der Lage der ersten Achse wird somit vorteilhaft bewirkt, dass mit dem Verfahren das Stellglied sicher und zuverlässig in jede gewünschte vordefinierte Lage verstellt werden kann.

Dadurch, dass die Mittel wenigstens ein Kalibrierungsschritt zur Ermittlung eines Lagewerts sind wird vorteilhaft bewirkt, dass der Lagewert beispielsweise beim Starten des Stellgebersystems oder beim Einbau des Rotors in den Stellantrieb einmalig bestimmt wird und die notwendige Zuordnung der elektrischen Phase zur Realraumrichtung des Rotors erfolgt. Ein solches Kalibrierungsverfahren bzw. ein solcher Kalibrierungsschritt kann vorteilhaft durch beispielsweise von außen vorgegebene Sensorik durchgeführt werden, so dass der Stellantrieb als solcher ohne eigene Sensoren auskommen kann. Weiterhin vorteilhaft ist es, dass nach dem Kalibrierungsschritt keine weiteren Lagewerte ermittelt werden müssen, wodurch das Verfahren besonders robust durchgeführt werden kann. Beispielsweise kann der Kalibrierungsschritt nach jedem Starten des Stellgebersystems durchgeführt werden.

Dadurch, dass bei der vordefinierten Stellung des Stellglieds das Stellglied vollständig geöffnet ist und/oder das Stellglied an einem mechanischen Anschlag zur Anlage kommt wird vorteilhaft bewirkt, dass das Verfahren besonders zuverlässig die vordefinierte Stellung des Stellglieds einstellen kann. So ist es beispielsweise möglich, die elektrische Phase des Raumzeigers um ein Vielfaches von 360° über den eigentlichen Zielwert hinaus zu verdrehen, um auf diese Weise zu bewirken, dass das Stellglied auch tatsächlich den mechanischen Anschlag bzw. die vollständig geöffnete Position erreicht. Durch den mechanischen Anschlag bzw. die vollständig geöffnete Position des Stellglieds wird bei einem derartigen Überdrehen des Raumzeigers durch den mechanischen Anschlag bzw. durch die vollständig geöffnete Position verhindert, dass das Stellglied entsprechend dem Raumzeiger ebenfalls über die gewünschte Stellung hinaus dreht. War hingegen die für die Drehung der elektrischen Phase des Raumzeigers zugrundegelegte Annahme über die Stellung des Stellglieds zu Beginn des Verfahrens unterschätzt worden, so kann durch das Überdrehen des Raumzeigers und den mechanischen Anschlag bzw. die vollständige Öffnung des Stellglieds zuverlässig eine eindeutig definierte Stellung des Stellglieds erreicht werden. Das Anfahren eines derartigen wohldefinierten Notbetriebspunktes ist für die Verwendung des Verfahrens in vielen Anwendungen beispielsweise im Kraftfahrzeugbereich von großer Bedeutung.

Dadurch, dass das Anfahren der vordefinierten Stellung des Stellglieds in weniger als 300ms, insbesondere in weniger als 100ms erfolgt, wird vorteilhaft bewirkt, dass das Verfahren auch im zeitkritischen Stellgebersystem, wie beispielsweise einer Drosselklappenvorrichtung eines Verbrennungsmotors zur Anwendung kommen kann.

Dadurch, dass die Ansteuerung für die Drehung der elektrischen Phase des Raumzeigers derart erfolgt, dass die Darstellung der Phasenansteuerwerte über der Ansteuerzeit eine zu jedem Zeitpunkt differenzierbare Kurve ergibt, also insbesondere die linksseitige Ableitung zu jedem Zeitpunkt mit der rechtsseitigen Ableitung übereinstimmt, wird vorteilhaft bewirkt, dass der Rotor des Stellantriebs der Phasenlage des Raumzeigers zuverlässig folgen kann und es beispielsweise beim Beginn oder am Ende der Drehung des Raumzeigers nicht zu einem Hängenbleiben des Rotors in Folge einer Gegenkraftbeaufschlagung bzw. aufgrund von Trägheitsmomenten kommt. Mit anderen Worten ausgedrückt wird dadurch vorteilhaft bewirkt, dass das Stellglied auch wirklich in die korrekte Stellung befördert wird und nicht der Raumzeiger den Rotor erst nach einer Drehung um ein Vielfaches von 360° der elektrischen Phasenlage anfängt mit zu bewegen bzw. der Rotor am Ende der Phasenänderung durch sein Trägheitsmoment über die Zielposition hinausschießt. Durch diese Ausführungsform wird ein sanftes Anfahren und Abbremsen der Raumzeigerbewegung gewährleistet. Vorteilhaft werden dadurch auch ruckartige oder schlagartige Bewegungen des Stellglieds unterbunden, die zu einer hohen Belastung auf z.B. Achslager und andere mechanische Komponenten führen können.

Gemäß einer Ausführungsform der Erfindung ist ein Verfahren zum Verstellen eines Stellglieds eines Stellgebersystems gemäß dem ersten Aspekt der Erfindung vorgesehen, wobei das Verfahren nur nach Eintritt eines definierten Ereignisses durchgeführt wird, und wobei ohne Eintritt des definierten Ereignisses für das Verstellen der Stellung des Stellglieds der Raumzeiger bezüglich der ersten Achse des Rotors um eine Unterschieds-Phasenlage ausgerichtet wird, die in einem Bereich zwischen 90° +/- 45° liegt, also zwischen 45° und 135° liegt, insbesondere in einem Bereich von 90° +/- 20°, also 70° bis 110°. Besonders vorteilhafte Wirkungen ergeben sich, wenn ohne Eintritt des definierten Ereignisses für das Verstellen der Stellung des Stellglieds der Raumzeiger bezüglich der ersten Achse des Rotors um eine Unterschieds-Phasenlage ausgerichtet wird, die in einem Bereich zwischen 85° und 110° liegt.

Gegenüber dem Stand der Technik bietet das vorgeschlagene Verfahren den Vorteil, dass in einer Art Normalbetrieb, der immer dann gegeben ist, wenn das definierte Ereignis nicht eintritt, das Stellgebersystem wirkungsgradoptimiert betrieben wird und das bereits oben vorgestellte vorteilhafte Verfahren erst nach Eintritt eines definierten Ereignisses zur Anwendung kommt. Vorteilhaft daran ist, dass im Normalbetrieb das Stellgebersystem mit einem verringerten Strombedarf auskommt, jedoch nach Eintritt des definierten Ereignisses schnell und zuverlässig jede vordefinierte Stellung des Stellglieds angefahren werden kann, ohne dass hierfür eine kontinuierliche Erfassung der Lage der ersten Achse des Rotors erforderlich ist. So kann beispielsweise nach Eintritt des definierten Ereignisses das Stellgebersystem schnell einen Notlaufpunkt des Stellglieds ansteuern, beispielsweise eine vollständig geöffnete Stellung des Stellglieds. Vorteilhaft kann ein solcher Notlaufpunkt im Gegensatz zu herkömmlichen Notlaufpunkten aus dem Stand der Technik auch eine Stellung des Stellglieds sein, bei welcher auf das Stellglied eine Federkraft wirkt, die das Stellglied ohne Bestromung des Stellantriebs von dem Notlaufpunkt weg bewegen würde, also z.B. der vollständig geöffnete Zustand einer Drosselklappe.

Eine Weiterbildung des Verfahrens gemäß dem zweiten Aspekt der Erfindung sieht vor, dass im Stellgebersystem Mittel zur Erfassung eines Lagewerts der Lage der ersten Achse vorgesehen sind, wobei die Mittel zur Erfassung des Lagewerts der Lage der ersten Achse wenigstens ein am Stellglied angeordneter Sensor und/oder wenigstens ein am Stellantrieb angeordneter Sensor sind. Durch diese Weiterbildung der Erfindung wird vorteilhaft bewirkt, dass im Normalbetrieb, also vor Eintritt des definierten Ereignisses, zuverlässig und sicher der wirkungsgradoptimierte Betrieb des Stellantriebs eingestellt werden kann. Beispielsweise können auch zwei oder mehr Sensoren zur Erfassung des Lagewerts der Lage der ersten Achse des Rotors vorgesehen sein, so dass das System eine Redundanz aufweist und bei Ausfall eines Sensors weiterhin eine Lageinformation zur Verfügung steht.

Dadurch, dass im Stellgebersystem ein Speicher zur Speicherung von Lagewerten der Lage der ersten Achse vorgesehen ist und dass bei Eintreten des definierten Ereignisses ein Lagewert aus dem Speicher abgerufen wird, um die Betriebs-Unterschiedsphasenlage, also eine Unterschieds-Phasenlage von weniger als 45°, einzustellen, wird vorteilhaft bewirkt, dass bei Eintritt des definierten Ereignisses zuverlässig ein Lagewert der Lage der ersten Achse des Rotors zur Verfügung steht. Beispielsweise kann das definierte Ereignis eine Fehlfunktion des Sensors oder der Ausfall des Sensors sein. In einem derartigen Fall ist besonders vorteilhaft, wenn Lagewerten in einem Speicher zur Verfügung stehen, damit das Stellgebersystem in einem Algorithmus plausibilisieren, welcher der zuletzt gespeicherten Lagewert noch eine sinnvolle Lageinformation enthält. So kann beispielsweise bei einem schleichenden Ausfall des Sensors ein Algorithmus prüfen, ab welchem Zeitpunkt die hinterlegten Lagewerte mit den für die Ansteuerung des Raumzeigers gelieferten Ansteuersignalen nicht mehr in einem plausiblen Zusammenhang stehen. Auf diese Weise kann dann vorteilhaft ein für die Einstellung der Betriebs-Unterschiedsphasenlage geeigneter Lagewert aus dem Speicher abgerufen werden und das Verfahren gemäß dem ersten Aspekt der Erfindung zur Anwendung gebracht werden.

In anderen Worten erfolgt auf diese Weise die Umschaltung von einem wirkungsgradoptimierten Betrieb, welcher z.B. auf der Erfassung von Lagewerten der ersten Achse des Rotors durch wenigstens einen Sensor beruht, auf einen Notlauf-Betrieb, welcher mit erhöhtem Strombedarf eine ähnliche Zuverlässigkeit in der Ansteuerung des Stellglieds bewirkt, dafür aber ohne die Erfassung der Lage der ersten Achse des Rotors beispielsweise über Sensoren auskommt.

In einer weiteren Ausführungsform des Verfahrens ist die vordefinierte Stellung eine Position bzw. Stellung des Stellglieds, bei der das Stellglied an einem mechanischen Anschlag zur Anlage kommt. Dabei ergibt sich verfahrensgemäß ein Differenz-Phasenwinkel der elektrischen Phase des Raumzeigers, um den die elektrische Phase des Raumzeigers gedreht werden soll, um die vordefinierte Position bzw. Stellung des Stellglieds anzusteuern. Der Differenz-Phasenwinkel wird ermittelt bzw. errechnet aus der Differenz einer ersten elektrischen Phase des Raumzeigers an der vordefinierten Stellung und einer zweiten elektrischen Phase des Raumzeigers, welche der Raumzeiger bei dem aus dem Speicher abgerufenen Lagewert aufweist zuzüglich eines positiven oder negativen Vielfachen von 360°, insbesondere zuzüglich 720° oder -720°. Auf diese Weise wird vorteilhaft sichergestellt, dass die vordefinierte Stellung des Stellglieds mit großer Sicherheit erreicht wird, selbst wenn der aus dem Speicher abgerufene Lagewert sich deutlich von dem in der Zwischenzeit erreichten Lagewert unterscheidet. Durch das Überdrehen bzw. Unterdrehen des Raumzeigers über bzw. unter die eigentlich notwendige elektrische Phasenlage des Raumzeigers wird der Rotor zuverlässig bis zum mechanischen Anschlag mitgenommen. Sollte das Stellglied bereits am mechanischen Anschlag angelangt sein, so wirkt sich das Überdrehen bzw. das Unterdrehen der elektrischen Phase des Raumzeigers angesichts der verfahrensgemäß eingestellten großen Amplitude des Raumzeigers höchstens dahingehend aus, dass der Rotor auf Grund einer auf ihn einwirkenden Gegenkraft ein kleines Stück zurückschnappt, dann jedoch erneut vom umlaufenden Raumzeiger an den mechanischen Anschlag geführt wird. Im Gegensatz zum Stand der Technik kann auf diese Weise vorteilhaft auch ein gegenkraftbeaufschlagter Notlaufpunkt mit großer Sicherheit angefahren werden. Ein derartiger gegenkraftbeaufschlagter Notlaufpunkt kann beispielsweise im Fall einer Drosselklappe der vollständig geöffnete Zustand der Drosselklappe sein. Dies kann wünschenswert sein, wenn in einer Brennkraftmaschine die Dosierung der notwendigen Luftzufuhr beispielsweise nicht mehr über die Öffnung der Drosselklappe gesteuert wird, sondern über den Hub der Ventile der Brennkraftmaschine.

Gemäß einem weiteren Aspekt der Erfindung ist eine Vorrichtung zum Verstellen eines Stellglieds eines Stellgebersystems gemäß Anspruch 12 vorgesehen. Dabei weist das Stellgebersystem einen elektrisch kommutierten Stellantrieb auf, der mit dem Stellglied gekoppelt ist. Dabei weist der Stellantrieb einen permanentmagnetischen Rotor auf, wobei der Rotor eine erste Achse aufweist, die sich entlang einer Polachse des Rotors erstreckt. Der Stellantrieb weist weiterhin einen elektrisch kommutierten Stator auf, wobei der Stator mit einem Raumzeiger bestrombar ist, wobei der Raumzeiger eine elektrische Phase und eine Amplitude aufweist, wobei der Raumzeiger bezüglich der ersten Achse des Rotors um eine Unterschieds-Phasenlage ausrichtbar ist. Es ist dabei vorgesehen, dass die Vorrichtung ausgebildet ist, eine vordefinierte Stellung des Stellglieds anzufahren, indem der Raumzeiger so ansteuerbar ist, dass die Unterschiedsphasenlage auf eine Betriebs-Unterschiedsphasenlage einstellbar ist, wobei der Raumzeiger so ansteuerbar ist, dass die Amplitude auf eine Betriebs-Amplitude einstellbar ist, wobei die Betriebs-Unterschiedsphasenlage und die Betriebs-Amplitude derart einstellbar sind, dass die Betriebs-Unterschiedsphasenlage weniger als 45° beträgt und dass der Raumzeiger ein zum Anfahren der vordefinierten Stellung geeignetes, auf den Rotor wirkendes Drehmoment erzeugt.

Gegenüber dem Stand der Technik wird durch diese Vorrichtung vorteilhaft bewirkt, dass in einem Stellgebersystem mit einem elektrisch kommutierten Stellantrieb das Verstellen des Stellglieds ohne kontinuierliche Erfassung der Lage der ersten Achse des Rotors zuverlässig und sicher erfolgen kann. Auf diese Weise kann das Stellgebersystem besonders kompakt kostengünstig hergestellt werden, indem beispielsweise auf die Anordnung von Sensoren verzichtet werden kann. Darüber hinaus kann auf diese Weise das Stellglied besonders schnell angesteuert werden, da eine Erfassung und Berechnung der Lage der ersten Achse des Rotors nicht mehr erforderlich ist, wodurch Zeit für Berechnungsvorgänge zur Ermittlung der Lageinformation eingespart wird. Auch wird der Strombedarf für eine derartige Berechnung vorteilhaft reduziert.

Eine Weiterbildung dieses Aspekt der Erfindung sieht vor, dass die Vorrichtung ausgebildet ist, in einem Normalbetriebszustand eine vordefinierte Stellung des Stellglieds anzufahren, indem der Raumzeiger bezüglich der ersten Achse des Rotors um eine Unterschieds-Phasenlage von mehr als 45° ausrichtbar ist, insbesondere um eine Unterschiedsphasenlage von mehr als 70°, wobei die Amplitude derart einstellbar ist, dass der Raumzeiger ein zum Anfahren der vordefinierten Stellung geeignetes auf den Rotor wirkendes Drehmoment erzeugt. Weiterhin ist die Vorrichtung ausgebildet, nur nach Eintritt eines definierten Ereignisses die vordefinierte Stellung des Stellglieds anzufahren, indem die Betrieb-Unterschiedsphasenlage und die Betriebs-Amplitude derart einstellbar sind, dass die Betriebs-Unterschiedsphasenlage weniger als 45° beträgt und dass der Raumzeiger ein zum Anfahren der vordefinierten Stellung geeignetes auf den Rotor wirkendes Drehmoment erzeugt. Dadurch wird vorteilhaft bewirkt, dass das Stellgebersystem in einem Normalbetriebszustand, also vor Eintritt des definierten Ereignisses, wirkungsgradoptimiert betrieben werden kann und dass nach Eintritt des definierten Ereignisses auf die kontinuierliche Erfassung der Lage der ersten Achse des Rotors verzichtet werden kann.

In einer weiteren Ausführungsform der Vorrichtung ist vorgesehen, dass im Stellgebersystem Mittel zur Erfassung eines Lagewerts der Lage der ersten Achse vorgesehen sind, wobei die Mittel zur Erfassung des Lagewerts wenigstens ein am Stellglied angeordneter Sensor und/oder wenigstens ein am Stellantrieb angeordneter Sensor sind, wobei im Stellgebersystem ein Speicher zur Speicherung von Lagewerten der Lage der ersten Achse vorgesehen ist und wobei bei Eintreten des definierten Ereignisses ein Lagewert aus dem Speicher abgerufen wird, um die Betriebs-Unterschiedsphasenlage einzustellen, und wobei das definierte Ereignis eine Fehlfunktion des Sensors oder der Ausfall des Sensors ist. Durch diese Weiterbildung wird vorteilhaft bewirkt, dass ein wirkungsgradoptimierter Normalbetrieb mit geringem Stromverbrauch für das Betreiben des Raumzeigers für die Bestromung des Stators so lange aufrechterhalten werden kann, wie zuverlässige Lagewerte über die Lage der ersten Achse des Rotors mittels des wenigstens einen Sensors erfasst werden können. Geht das Sensorsignal verloren oder ist es nicht mehr plausibel, so wird in einen Notbetrieb umgeschaltet, der eine zuverlässige Verstellung des Stellglieds in jede gewünschte Position bzw. Stellung des Stellglieds ermöglicht, ohne dass kontinuierliche Lagewerte der Lage des ersten Achse des Rotors zur Verfügung stehen. Beispielsweise kann auf diese Weise zumindest ein Notlaufpunkt bzw. eine Notlaufstellung des Stellglieds angefahren werden.

Mit dem Verfahren ist es jedoch grundsätzlich auch möglich, nach Eintritt des definierten Ereignisses, das heißt beispielsweise nach Ausfall des Sensors auch dauerhaft das Stellglied in jede gewünschte bzw. von außen vorgegebenen Position bzw. Stellung zu verstellen. Letztlich ist auf diese Weise ein Betrieb des Stellgebersystems zuverlässig auch ohne kontinuierliche Erfassung der Lagewerte der Lage der ersten Achse des Rotors möglich. Dadurch können beispielsweise bei der Verwendung eines derartigen Stellgebersystems in einem Kraftfahrzeug, z.B. eine Drosselklappe, oder einer technischen Anlage Situationen vermieden werden oder hinausgezögert werden, in denen der Betreiber des Kraftfahrzeugs bzw. der technischen Anlage unmittelbar nach Eintritt des definierten Ereignisses eine Werkstatt aufsuchen muss. Dies kann vorteilhafte Sicherheitsaspekte bewirken, indem beispielsweise ein Kraftfahrzeug nicht in einem Kriechmodus mit nur wenig geöffneter Drosselklappe zur nächsten Werkstatt fahren muss, was in bergigen Gelände bei vollgeladenem Kraftfahrzeug sehr schwierig sein kann und auf Autobahnen ein Sicherheitsrisiko für den übrigen Verkehr darstellt.

Gemäß einem vierten Aspekt der Erfindung ist ein Computerprogrammprodukt vorgesehen, das einen Programmcode enthält, der, wenn er auf einer Datenverarbeitungseinheit ausgeführt wird, ein Verfahren gemäß dem ersten oder zweiten Aspekt der Erfindung durchführt. Ein derartiges Computerprogrammprodukt eignet sich in vorteilhafter Weise, in einem Stellgebersystem beispielsweise auch bei einem Ausfall von Sensoren sicher und zuverlässig ein Stellglied verstellen zu können.

Zeichnungen

Weitere Merkmale und Vorteile der vorliegenden Erfindung werden dem Fachmann aus der nachfolgenden Beschreibung beispielhafter Ausführungsformen, die jedoch nicht als die Erfindung beschränkend auszulegen sind, unter Bezugnahme auf die beigelegten Zeichnungen ersichtlich.
Es zeigen:

Fig. 1a eine schematische Darstellung eines Stellgebersystems;

Fig. 1b eine Darstellung des vom Stator auf den Rotor ausgeübten Drehmoments für verschiedene Amplituden und Unterschieds-Phasenlagen des den Stator umlaufenden Raumzeigers sowie eine Darstellung des auf das Stellglied wirkenden Gegendrehmoments in Abhängigkeit eines Drehwinkels des Stellglieds;

Fig. 2 eine Darstellung verschiedener Raumzeiger-Vektoren, die dasselbe Drehmoment auf den Rotor ausüben;

Fig. 3a eine Darstellung des Verfahrensablaufs bei Normalbetrieb;

Fig. 3b eine Darstellung des Verfahrensablaufs nach Eintritt des definierten Ereignisses; F

Fig. 4 eine Darstellung der Ansteuerung der elektrischen Phasenlage des Raumzeigers von einer ersten Lage bis zur Lage bei der vordefinierten Stellung des Stellglieds.

Alle Figuren sind lediglich schematische Darstellungen erfindungsgemäßer Vorrichtungen bzw. Verfahren bzw. ihrer Bestandteile gemäß Ausführungsbeispielen der Erfindung. Insbesondere Abstände und Größenrelationen sind in den Figuren nicht maßstabsgetreu wiedergegeben. In den verschiedenen Figuren sind sich entsprechende Elemente mit den gleichen Referenznummern versehen.

**EP 3 152 831 B1**

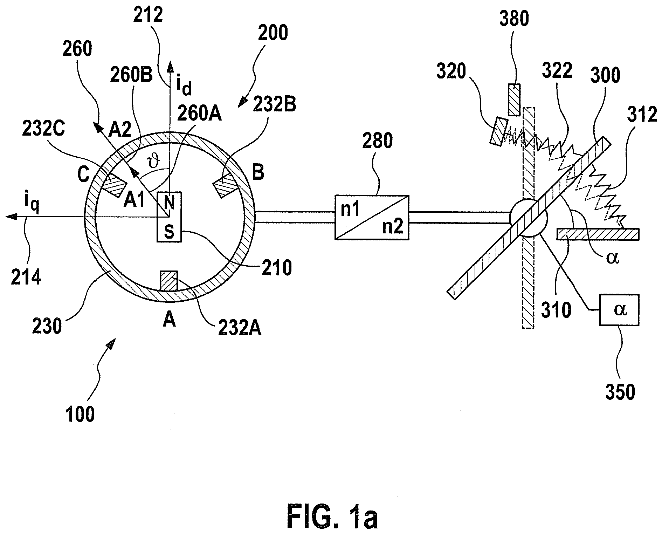

Fig. 1a zeigt ein Stellgebersystem 100, welches von einem nicht dargestellten Steuergerät angesteuert werden kann. Das Stellgebersystem umfasst einen elektronisch kommutierten Stellantrieb 200, z.B. einen bürstenlosen Elektromotor.

Der Stellantrieb 200 ist über ein Getriebe 280 mit einer Getriebeübersetzung G = n1:n2 an ein Stellglied 300 gekoppelt. Der Stellantrieb 200 weist einen permanentmagnetischen Rotor 210 auf, wobei der Rotor eine erste Achse 212 aufweist, die sich entlang einer Polachse 290 des Rotors 210 erstreckt. Die erste Achse 212 wird üblicherweise auch als d-Achse bezeichnet. Der Rotor 210 weist darüber hinaus eine senkrecht zur ersten Achse 212 ausgerichtete zweite Achse 214 auf, die somit auch senkrecht zur Polachse 290 steht und fachüblich als q-Achse bezeichnet wird (jeweils im Koordinatensystem des Rotors).

Der Stellantrieb 200 weist außerdem einen elektronisch kommutierten Stator 230 auf, welcher in der dargestellten Ausführungsform eine Polpaarzahl von 1 aufweist. Der Stator weist somit drei bestrombar Spulen 232A, 232B, 232C auf, die zueinander um 120° versetzt angeordnet sind. Entsprechend wären bei einer Polpaarzahl von 2 insgesamt sechs bestrombar Spulen vorgesehen, welche um jeweils 60° zueinander versetzt angeordnet wären. Der Stator 230, bzw. die Spulen 232A, 232B, 232C sind mit einem Raumzeiger 260 bestrombar. Der Raumzeiger 260 kann durch Polarkoordinaten beschrieben werden. Bezüglich eines ortsfesten Koordinatensystems des Stators 230 lässt sich der Raumzeiger 260 eindeutig durch eine elektrische Phase $\phi_{el}$ bestimmen, die einen Winkelwert zu einer Referenzachse im Stator 230 beschreibt, sowie durch eine Amplitude A, welche die Länge des Raumzeigers 260 angibt und proportional zur Größe des den Stator 230 beaufschlagenden Stroms ist. Die elektrische Phase $\phi_{el}$ kann dabei beliebige positive wie negative Werte annehmen, wobei im ortsfesten Koordinatensystem des Stators 230 jeweils nach einem Vielfachen von 360° der Raumzeiger 260 in dieselbe Richtung zeigt. Somit kann die Richtung des Raumzeigers 260 im ortsfesten Koordinatensystem des Stators 260 nur bis auf ein Vielfaches von 360° die elektrische Phase $\phi_{el}$ des Raumzeigers 260 wiedergeben. Bezüglich des Rotors 210 weist der Raumzeiger 260 eine Unterschieds-Phasenlage $\vartheta$ auf, wobei die Unterschieds-Phasenlage $\vartheta$ sich als derjenige Winkel ergibt, um den der Raumzeiger 260 (im ortsfesten Koordinatensystem des Rotors 210) gegenüber der ersten Achse 212 des Rotors 210 verdreht ist. Die Unterschieds-Phasenlage & kann definitionsgemäß Winkel zwischen - 180° und +180° annehmen. Der permanentmagnetischen Rotor 210 wird nun durch das in Folge der Bestromung der Statorspulen 232 bewirkte Stator-Magnetfeld dazu veranlasst, sich mit seiner Polachse 290 entlang dieses Stator-Magnetfelds auszurichten. Somit kann durch eine Drehung des Raumzeigers 260 und des sich mit dem Raumzeiger 260 mitdrehenden Stator-Magnetfelds der Rotor 210 mechanisch verdreht werden. Eine Drehung des Rotors 210 erfolgt dabei dann, wenn durch das Stator-Magnetfeld eine Kraft bzw. ein aus dieser Kraft resultierendes Drehmoment auf den Rotor 210 wirkt. Dies kann (im gegendrehmomentlosen Zustand) nur dann der Fall sein, wenn das Stator-Magnetfeld und damit der Raumzeiger 260 gegenüber der ersten Achse 212 des Rotors 210 um eine Unterschieds-Phasenlage von mehr als 0° verdreht ist.

Der Rotor 210 folgt in einem Koordinatensystem des Stators 230 betrachtet mit seiner mechanischen Winkelphase also der elektrischen Phase des Raumzeigers 260, solange der Raumzeiger 260 eine ausreichende Amplitude A aufweist, um ein gegebenenfalls auf den Rotor 210 wirkendes Gegendrehmoments zu überwinden. Unterstellt, es handele sich um einen gegendrehmomentlosen Zustand ist somit die mechanische Phasenlage des Rotors bzw. die Rotorlage bzw. Lage der ersten Achse 212 des Rotors 200 in eindeutiger Weise an die elektrische Phasenlage $\phi_{el}$ des Raumzeigers 260 gekoppelt. Unter dem Begriff "Lagewert L der Lage des ersten Achse 212 des Rotors 210" kann somit die mechanische Winkelverdrehung des Rotors 210 ausgehend von einem Ursprungszustand von 0° verstanden werden.

In der Zeichnung sind beispielhaft zwei verschiedene Raumzeiger 260 dargestellt, die dieselbe Unterschieds-Phasenlage $\vartheta$ gegenüber dem Rotor 210 aufweisen, jedoch unterschiedlich lang sind, also unterschiedliche Amplituden A aufweisen. Dabei weist der mit 260A bezeichnete Raumzeiger eine geringere Amplitude A1 auf als der mit 260B bezeichnete Raumzeiger mit seiner Amplitude A2. Außerdem sind Raumzeiger 260 dargestellt, die mit $i_q$ und $i_d$ bezeichnet sind. Dabei ist der mit $i_d$ bezeichnete Raumzeiger 260 entlang der ersten Achse des Rotors 210 ausgerichtet und weist eine Unterschieds-Phasenlage $\vartheta$ von 0° auf. Der mit $i_q$ bezeichnete Raumzeiger 260 ist dagegen entlang der zweiten Achse 214 des Rotors 210 ausgerichtet und weist eine Unterschieds-Phasenlage von 90° auf. Allgemein lässt sich jeder Raumzeiger 260 darstellen als eine Linearkombination des mit $i_q$ bezeichneten Raumzeigers 260 und des mit $i_d$ bezeichneten Raumzeigers 260. Die elektrische Phase $\phi_{el}$ der dargestellten Raumzeiger 260 ist hier zunächst unerheblich.

Im rechten Teil der Fig. 1a ist das mit dem Stellantrieb 200 gekoppelte Stellglied 300 dargestellt. Das Stellglied kann beispielsweise eine Drosselklappe, ein General-Purpose-Actuator, eine Ladungsbewegungsklappe, eine Ansteuerung eines Abgasrückführventils oder ein Scheibenwischermotor oder aber irgendein anderes an einem Steller angeordnetes Element sein. Das Stellglied 300 ist im dargestellten Ausführungsbeispiel federbeaufschlagt. Dabei ist ein erstes Widerlager 310 für eine erste Feder 312 vorgesehen, wobei die erste Feder 312 dafür ausgelegt ist, das Stellglied 300 zum ersten Widerlager 310 zu bewegen. Außerdem ist ein zweites Widerlager 320 für eine zweite Feder 322 vorgesehen, welche entgegengesetzte Richtung der ersten Feder 312 wirkt. Im dargestellten Ausführungsbeispiel ist das Stellglied 300 beispielsweise in einer in der Figur waagrechten Lage, also beim Anschlag an das erste Widerlager 310 in einer geschlossenen Lage. Es lässt sich entgegen dem Uhrzeigersinn bis zu einem mechanischen Anschlag 380 um eine mechanische Phase bzw. einen mechanischen Stellwinkel $\alpha$ bewegen. Eine derartige Bewegung kann durch das Rotieren des Rotors 210 des Stellantriebs 200 bewirkt werden. Im unbestromten Zustand des Stellantriebs 200 bewegt sich das Stellglied 300 in eine Position, in welcher die Kräfte der ersten Feder 312 und der zweiten Feder 322 sich gegenseitig aufheben. Um das Stellglied aus dieser Position in irgendeine der beiden Richtungen heraus zu bewegen ist dann ein Drehmoment notwendig, welches gegen die Federn wirkt. Im dargestellten Ausführungsbeispiel ist am Stellglied ein Sensor 350 vorgesehen, welcher einen Lagewert des Stellglieds 300 erfasst.

Da der Rotor 210 über das Getriebe 280 in eindeutiger Weise mit dem Stellglied 300 gekoppelt ist, ist mit der Bestimmung der Stellung des Stellglieds 300, also des Stellwinkels a, auch eindeutig der Lagewert L der ersten Achse 212 des Rotors, also die mechanische Phase der ersten Achse 212 des Rotors 210 bzw. die Rotorlage bestimmt. Die mechanisch Phase $\alpha$ des Stellglieds 300 ist mit dem Lagewert L der ersten Achse 212 des Rotors 210 über folgende Relation verknüpft:

$$\alpha = L/G,$$

wobei G das Übersetzungsverhältnis G=n1:n2 des Getriebes 280 darstellt.

Unterstellt, der Raumzeiger 260 ist jederzeit derart ausreichend bestromt, dass er den Rotor 210 mitziehen kann, dass also die auf den Rotor 210 wirkende Kraft des Stators 230 größer ist als beispielsweise die mit zunehmender Öffnung des Stellglieds 300 anwachsende, auf den Rotor 210 wirkende Gegenkraft durch die erste Feder 312, dann ist die mechanische Phase des Stellglieds 300 auch eindeutig an die elektrische Phase $\phi_{el}$ des Raumzeigers 260 gekoppelt und zwar nach der Relation:

$$\alpha = L/(G*NP),$$

wobei NP die Polpaarzahl des Stators angibt.

Bei einer Polpaarzahl von NP = 1, einer Getriebeübersetzung von G = 40:1 entspricht also eine Drehung des Raumzeigers 260 um 3600° einer Drehung der ersten Achse 212 des Rotors 210 um ebenfalls 3600° und bewirken eine mechanische Drehung des Stellglieds 300 um einen Stellwinkel $\alpha$ von 90°. Es sind selbstverständlich auch andere Getriebeübersetzungen möglich, beispielsweise G = 20:1.

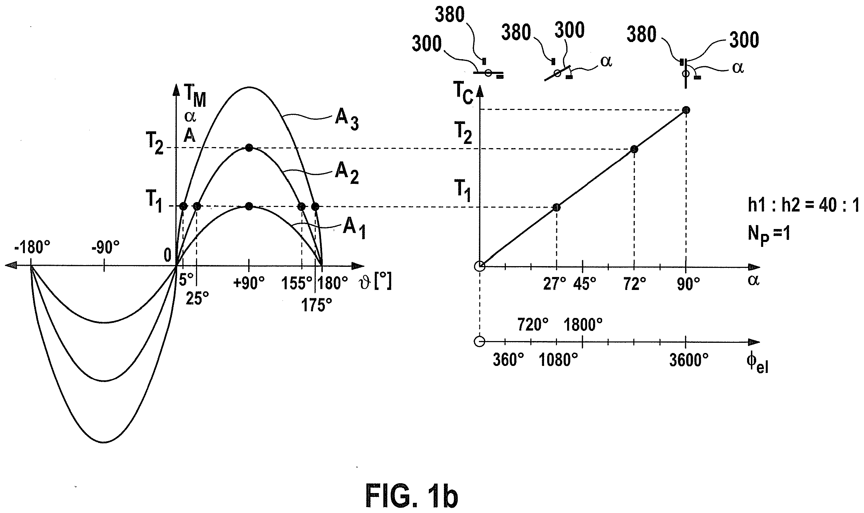

Fig. 1b zeigt auf der rechten Seite eine Darstellung des vom Stellglied 300 auf den Rotor 210 wirkenden Gegendrehmoments $T_c$ in Abhängigkeit eines Stellwinkels $\alpha$ des Stellglieds 300. Der Einfachheit halber ist für den funktionalen Zusammenhang zwischen dem Gegendrehmoment Tc und dem Stellwinkel $\alpha$ des Stellglieds 300 ein linearer Zusammenhang angenommen wie er sich beispielsweise aus dem Hookeschen Gesetz für eine Feder ergibt. Selbstverständlich kann auch ein anderer funktionaler Zusammenhang zwischen dem Gegendrehmoment Tc und dem Drehwinkel bzw. Stellwinkel $\alpha$ bestehen. Um also das Stellglied in Richtung größerer Stellwinkel $\alpha$ zu verstellen muss ein größeres Gegendrehmoments Tc am Rotor 210 überwunden werden. Ein derartiges Drehmoment Tc ist letztlich durch den Stellantrieb 200 bereitzustellen. Das bedeutet, dass mit zunehmendem Stellwinkel $\alpha$ des Stellglieds 300 das vom Raumzeiger 260 auf den Rotor 210 ausgeübte Drehmoment ansteigen muss.

Fig. 1b zeigt auf der linken Seite eine Darstellung des vom Stator 230 auf den Rotor 210 ausgeübte Drehmoment $T_M$ für verschiedene Amplituden A und Unterschieds-Phasenlage $\vartheta$ des den Stator 230 bestromenden Raumzeigers 260. Die Unterschieds-Phasenlage $\vartheta$ ist dabei von -180° bis +180° aufgetragen. Wie weiter oben bereits dargestellt ergibt sich bei einer Unterschieds-Phasenlage von 0° unter idealen Bedingungen ein Zustand, in dem kein Drehmoment vom Raumzeiger 260 auf die erste Achse 212 des Rotors 210 ausgeübt wird, da der Raumzeiger 260 und die erste Achse 212 in diesem Fall kollinear zueinander angeordnet sind.

In anderen Worten weist in diesem Fall der Raumzeiger 260 keine Komponente in Richtung der q-Achse, also der zweiten Achse 214 des Rotors 210, auf, welche allein ein Drehmoment auf den Rotor 210 ausüben kann. Bei einer Unterschieds- Phasenlage von - 90° und +90° ist das vom Raumzeiger 260 auf die erste Achse 212des Rotors 210 ausgeübte Drehmoment dabei maximal. Anders ausgedrückt kann dementsprechend bei einer Unterschieds-Phasenlage $\vartheta$ von ungefähr 90° also bei fester Amplitude das größte Drehmoments erzielt werden bzw. kann für ein vorgegebenes, zu erreichendes Drehmoment $T_M$ dieses bei einer Unterschieds-Phasenlage $\vartheta$ von 90° mit einer geringeren Amplitude erreicht werden als bei jeder anderen Unterschieds-Phasenlage $\vartheta$. Somit kann der Stellantrieb 200 mit einer Unterschieds-Phasenlage $\vartheta$ von ungefähr 90° wirkungsgradoptimiert betrieben werden, da er so den geringsten Strombedarf bzw. die geringste Amplitude des Raumzeigers 260 benötigt, um ein vorgegebenes Drehmoment $T_M$ zu erreichen.

Liest man nun die linke Seite und die rechte Seite der Fig. 1b zusammen, so kann für jeden Stellwinkel $\alpha$ des Stellglieds 300 ein Gegendrehmoments $T_C$ ermittelt werden, welches vom durch den Raumzeiger 260 herbeigeführten Magnetfeld des Stators 230 auf den Rotor 210 ausgeübt werden muss, um den Stellwinkel $\alpha$ des Stellglieds 300 zu erreichen bzw. zu halten. Um den auf der rechten Seite beispielhaft dargestellten Stellwinkel von 27° zu erreichen bzw. zu halten ist ein Wert des Gegendrehmoments TC von T1 notwendig. Oberhalb der Abbildung ist schematisch die Stellwinkel-Stellung des Stellglieds 300 für einige Stellwinkel α dargestellt.

Somit muss ein Raumzeiger 260 bereitgestellt werden, der gegenüber dem Rotor 210 ein Drehmoment $T_M$ von T1 erzeugt. Letztlich muss für jeden Stellwinkel α gelten TM = TC. Wie auf der linken Seite von Fig. 1b zu sehen ist kann dies bei einem Raumzeiger 260 mit einer Amplitude A3 bei einer Unterschieds-Phasenlage von beispielsweise 5° oder 175° erreicht werden. Wird ein Raumzeiger mit einer Amplitude A2 eingestellt, wobei A2 geringer ist als A3, so beträgt die zur Erzielung von T1 notwendige Unterschieds-Phasenlage beispielsweise 25° oder 155°. Wird dagegen ein Raumzeiger 260 mit einer wirkungsgradoptimierten Amplitude A1, die geringer ist als A2, eingestellt, so wird das Drehmoment T1 nur bei einer Unterschieds-Phasenlage von 90° erreicht.

Bei noch geringeren Amplituden dreht die Gegenkraft (z.B. der ersten Feder 312) das Stellglied 300 und damit den daran gekoppelten Rotor 210 so weit zurück, bis die Drehmomentgleichung wieder erfüllt ist, also das Gegenkraftdrehmoment Tc vom durch die Amplitude und die Unterschieds-Phasenlage ϑ erzeugten Drehmoment $T_M$ kompensiert wird.

Für einen Stellwinkel α von 72° wirkt ein zweites Gegendrehmoment T2, welches größer ist als das erste Gegendrehmoment T1. Somit ist es notwendig, auch am Rotor ein das zweite Drehmoment bereitzustellen. Dies kann in der beispielhaften Abbildung bei einer Unterschieds-Phasenlage ϑ von 90° mit der Amplitude A2 bewirkt werden oder bei einer höheren Amplitude, wobei dann eine von 90° abweichende Unterschieds-Phasenlage ϑ ausreicht.

Daraus folgt letztlich, dass zur Erzielung eines Drehmoments von T1 ein Lösungsraum mit verschiedenen Kombinationen aus Unterschieds-Phasenlage ϑ und Amplituden A existiert, wobei für eine Unterschieds-Phasenlage ϑ von 90° nur eine Amplitude $A_u$ passt, wobei diese Amplitude $A_u$ den geringsten Wert aller Amplituden des Lösungsraums hat. Gleichzeitig ist für immer geringere Unterschieds-Phasenlagen eine immer größerer Amplitude notwendig, um das gewünschte Drehmoment T1 bereitstellen zu können. Somit wird die Untergrenze der Unterschieds-Phasenlage hin zum Wert 0° bzw. die Obergrenze hin zum Wert 180° letztlich konstruktionsbedingt durch die maximal verfügbare Amplitude $A_o$ bestimmt (also z.B. durch die Stromtragfähigkeit der Statorspulen 232). Um den Bauraum möglichst gering zu halten und gleichzeitig den Energieverbrauch möglichst gering zu halten ist es daher üblich, derartige elektronisch kommutiertem Motoren bzw. Stellantriebe 200 wirkungsgradoptimiert zu betreiben. Durch das Gegendrehmoments und innere Reibungskräfte kann in der realen Welt die wirkungsgradoptimierte Unterschieds-Phasenlage von 90° abweichen. So sind geringfügig größere Beträge für hohe Drehzahlen sinnvoll, wodurch durch Schwächung des magnetischen Rotorflusses höhere Momente erreicht werden können. Die exakten Werte für die Unterschieds-Phasenlage ϑ und die Amplitude A des Raumzeigers 260 können durch verschiedene Verfahren ermittelt werden, z.B. durch eine sogenannte Feldorientierte Methode (FOR-Methode) mit direkter Messung der Phasenströme. In jedem Fall ist für die Einstellung des Raumzeigers im wikungsgradoptimierten Betrieb, also bei einer Unterschieds-Phasenlage von ungefähr 90° kontinuierliche Informationen über die Lage der ersten Achse 212 des Rotors 210 notwendig.

Auf einer zweiten x-Achse, die, unterhalb der ersten x-Achse mit den Stellungswinkeln α angeordnet ist, ist die gemäß der Auslegung des Stellgebersystems 100 zu jedem Stellwinkel α korrespondierende elektrische Phase $\phi_{el}$ des Raumzeigers 260 dargestellt. Diese entspricht der mechanischen Phase des Rotors 210, sofern der Rotor 210 keinen Schlupf erlitten hat.

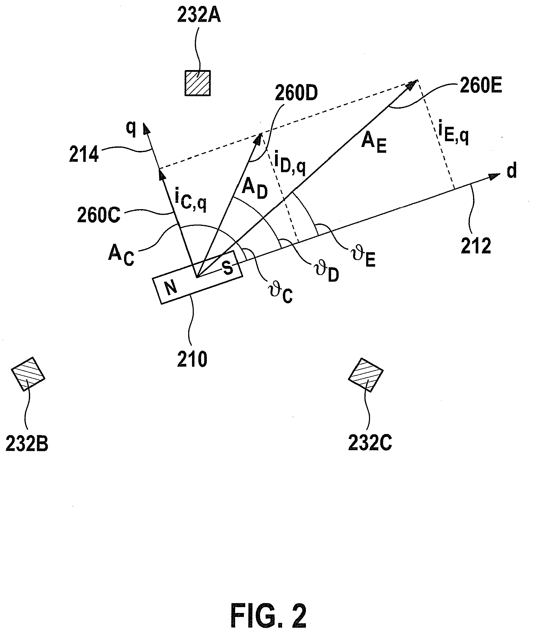

Fig. 2 zeigt detailliert den Zusammenhang zwischen dem Rotor 210 mit seiner ersten Achse 212 und mit seiner zweiten Achse 214 sowie drei unterschiedlichen Raumzeigern 260C, 260D und 260E. Alle drei Raumzeiger 260C, 260D und 260E üben dasselbe Drehmoment auf den Rotor 210 aus. Denn alle drei Raumzeiger 260C, 260D, 260E weisen dieselbe Vektorkomponente $i_{C,q}$, $i_{D,q}$ und $i_{E,q}$ in Richtung der zweiten Achse 214 des Rotors 210 auf. Da die drei Raumzeiger 260C, 260D, 260E jedoch jeweils unterschiedliche Unterschieds-Phasenlage von $\vartheta_C$, $\vartheta_D$ und $\vartheta_E$ aufweisen müssen sie unterschiedlich große Amplituden $A_C$, $A_D$, $A_E$ aufweisen, um das gewünschte Drehmoment T1 zu bewirken. Je näher die Unterschiedsphasenlage ϑ sich dabei der ersten Achse 212 des Rotors 210 nähert, desto größer muss die Amplitude A werden, um dieselbe Vektorkomponente in Richtung der zweiten Achse 214 des Rotors 210 zu erzeugen.

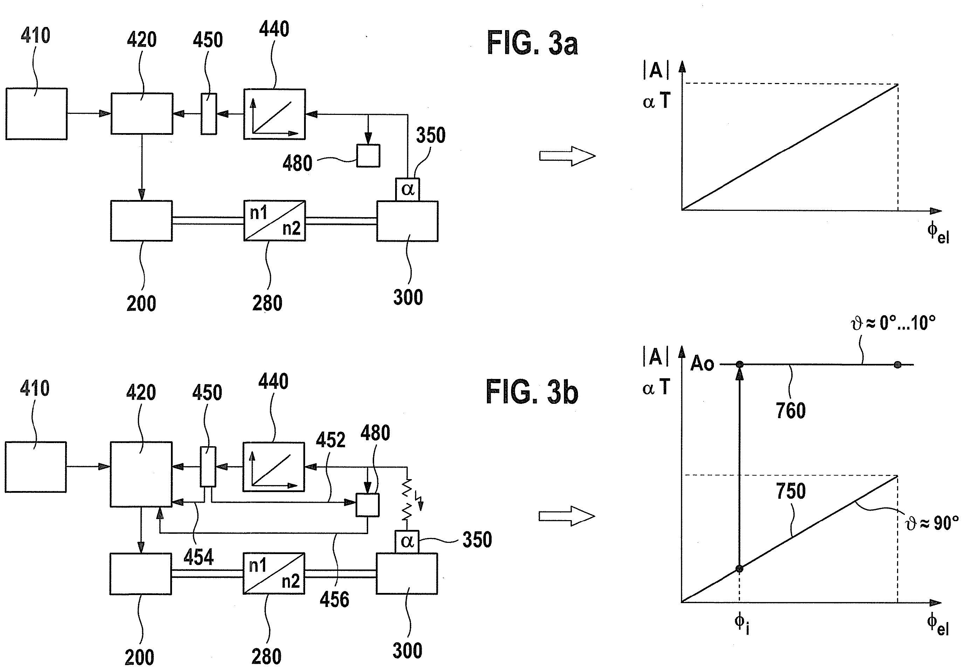

Fig. 3a zeigt auf der linken Seite einen Regelkreis, um ein Verfahren zum Einstellen des Stellglieds 300 auf einen gewünschten Wert durchzuführen. In einem Schritt 410 wird eine Stellwinkelvorgabe $\alpha_{Soll}$ bzw. eine dazu proportionale Drehmomentsvorgabe $T_{soll}$, die das Stellglied 300 erreichen soll, in eine Steuerung 420 für die Stellantriebskommutierung bzw. für die Erzeugung eines geeigneten Raumzeigers 260 eingespeist. Dieser Wert kann in der Steuerung 420 zwischengespeichert werden. Es kann auch eine andere Ausführungsform möglich sein, bei welcher dieser Wert zusätzlich zu der Speicherung in der Steuerung 420 oder an Stelle der Speicherung in der Steuerung 420 in einem separaten Speicher 480 gespeichert wird. Mit dem Raumzeiger 260 wird der Stator 230 des Stellantriebs 200 bestromt, wodurch der Rotor 210 auf einen gewünschten Lagewert $L_{Soll}$ gedreht werden soll. Mittels des Getriebes 280 wird dadurch auch das Stellglied 300 bewegt. Ein am Stellglied 300 angeordneter Sensor 350 erfasst die Stellung des Stellglieds 300 und damit mittelbar einen Lagewert L der ersten Achse 212 des Rotors 210. Bei diesem Sensor 350 kann es sich wie in Fig. 3a dargestellt um einen Drehwinkelsensor handeln oder - in anderen, hier nicht dargestellten Ausführungsformen - um einen Lagesensor zur Erfassung einer translatorischen Lage. Dieser Lagewert L wird einerseits dem Speicher 480 zugeführt. Andererseits wird unter Kenntnis einer Rotorlagenkennlinie 440 bestimmt, wie stark die elektrische Phase $\phi_{el}$ des Raumzeigers 260 noch verdreht werden muss, um den Zielwert $\alpha_{Soll}$ bzw. das Drehmoment $T_{Soll}$ zu erreichen. Bevor das Ergebnis an die Steuerung 420 der Stellantriebskommutierung zugeführt wird, wird in einer Sensorsignalauswertung 450 geprüft, ob das Sensorsignal des Sensors 350 plausibel ist oder überhaupt vorliegt. Ist das Ergebnis der Prüfung im Prüfschritt 450 gültig, so wird der Steuerung 420 der Stellantriebskommutierung übermittelt, wie stark der Raumzeiger weiter verdreht werden soll, um den Zielwert $\alpha_{Soll}$ bzw. $T_{Soll}$ zu erreichen. In dieser Normalbetriebsart wird der Stellantrieb 200 vorzugsweise wirkungsgradoptimiert betrieben, also mit einer Betriebs-Unterschiedsphasenlage $\vartheta_O$, die in einem Bereich zwischen 45° und 135°, bevorzugt in einem Bereich zwischen 70° und 110° und ganz besonders bevorzugt in einem Bereich zwischen 85° und 110° liegt. Idealerweise liegt die Betriebs-Unterschiedsphasenlage $\vartheta_O$ bei ungefähr 90°.

Auf der rechten Seite der Figur 3a ist dabei schematisch dargestellt, wie mit zunehmender elektrischen Phase $\phi_{el}$ des Raumzeigers 260 auf der x-Achse der Betrag der Amplitude A des Raumzeigers 260 auf der y-Achse erhöht werden muss, um im wirkungsgradoptimierten Betrieb das Gegendrehmoment $T_C$ zu kompensieren. Die Zuordnung der zur elektrischen Phase $\phi_{el}$ passenden Amplitude A des Raumzeigers 260 wird mit Hilfe der Rotorlagenkennlinie von der Steuerung 420 vorgenommen.

Fig. 3b zeigt einen Zustand, bei dem im Prüfschritt 450 festgestellt wurde, dass das Sensorsignal des Sensors 350 nicht plausibel ist, oder dass das Sensorsignal sogar komplett entfallen ist. In diesem Fall, der in dem dargestellten Ausführungsbeispiel des Verfahrens einem definierten Ereignisses entspricht, wird von dem Prüfschritt 450 ein Speicherabruf eines plausiblen Lagewerts L aus dem Speicher 480 veranlasst, wie durch den Pfeil 452 dargestellt. Außerdem wird aus der Steuerung 420 und/oder aus dem Speicher 480 der dazugehörige Wert der Stellwinkelvorgabe $\alpha_{Soll}$ bzw. der dazu proportionalen Drehmomentsvorgabe $T_{Soll}$, die das Stellglied 300 erreichen soll, abgerufen. Ein plausibler Lagewert L kann dabei beispielsweise der letzte verfügbare valide Lagewert L sein oder ein gleitender Durchschnitt oder eine andere Mittelung oder Verrechnung aus mehreren gespeicherten Lagewerten L des Speichers 480. Gleichzeitig wird vom Prüfschritte 450 ein Signal, dargestellt durch den Pfeil 454 an die Steuerung 420 der Stellantriebskommutierung gesendet, welches die Raumzeiger-Ansteuerung aus dem Normalbetriebs-Modus in einen Notbetrieb-Modus überführt.

Im Not-Betriebsmodus wird dabei mangels verfügbarer plausibler Lagesignale des Stellglieds 300 und/oder des Rotors 210 des Stellantriebs 200 der Raumzeiger 260 nicht mehr wirkungsgradoptimiert angesteuert. Die Stellantriebskommutierung erhält außerdem den aus dem Speicher abgerufenen Lagewert L über ein Signalweg gemäß dem Pfeil 456. Ausgehend von diesem Lagewert L und dem dazu gehörenden zuletzt angelegten Raumzeiger 260 mit Amplitude A und Unterschieds-Phasenlage $\vartheta$ und der elektrischen Phase $\phi_{el}$ des Raumzeigers 260 wird umgehend die Unterschieds-Phasenlage $\vartheta$, die im Normalbetrieb bei wenigstens 45°, idealerweise wenigstens 70° bevorzugt bei ungefähr 90° liegt auf eine Betriebs-Unterschiedsphasenlage $\vartheta_O$ von weniger als 45°, idealerweise ungefähr zwischen 0° und 10° umgestellt und gleichzeitig die Amplitude A des Raumzeigers 260 auf eine Betriebs-Amplitude $A_O$ erhöht. Die Kombination aus Betriebs-Amplitude $A_O$ und Betriebs-Unterschiedsphasenlage $\vartheta_O$ wird dabei derart gewählt, dass auf die erste Achse 212 des Rotors 210 auf dem gesamten Weg, der von der derzeitigen Stellung des Stellglieds 300 beim abgerufenen Lagewert L bis zur vordefinierten gewünschten Stellung des Stellglieds 300 zurückzulegen ist, vom Raumzeiger 260 ein größeres Drehmoment $T_M$ ausgeübt wird als das maximale auf dem Weg auftretende Gegendrehmoment Tc. Dies ist auf der rechten Seite der Abbildung durch den sprunghaften Übergang der ansteigenden Kurve 750 zur horizontalen Kurve 760 mit konstanter Betriebs-Amplitude $A_O$ zu erkennen. Dazu erfolgt noch ein Phasensprung in der Unterschieds-Phasenlage $\vartheta$.

Das Verfahren beruht somit in anderen Worten auf einem Phasensprung der Unterschieds-Phasenlage $\vartheta$ und einem Amplitudensprung des Raumzeigers 260. Aus dem aus dem Speicher 480 zur Verfügung gestellten Lagewert L wird auch ermittelt, um welchen Wert die elektrische Phase $\phi_{el}$ des Raumzeigers 260 verändert werden muss, um vom aus dem Speicher abgerufenen Lagewert L der ersten Achse 212 des Rotors 210 zu dem Lagewert $L_{Ende}$ der ersten Achse 212 des Rotors 210 zu gelangen, bei dem die vordefinierte Stellung des Stellglieds 300 erreicht wird. Die Steuerung 420 der Stellantriebskommutierung verändert nun die elektrische Phase $\phi_{el}$ des Raumzeigers 260 so lange, bis der vordefinierte Lagewert $L_{Ende}$ erreicht ist. Dadurch, dass das vom Raumzeiger 260 auf den Rotor 210 ausgeübte Drehmoment $T_M$ stets größer ist als das maximale Gegendrehmoment $T_C$ folgt der Rotor 210 somit dem Raumzeiger 260 und das Stellglied 300 bewegt sich, über das Getriebe 280 an den Stellantrieb 200 gekoppelt, bis zur vordefinierten Stellung des Stellglieds 300.

Für den Fall eines Sensortotalausfalls (z.B. für Verlust der Sensorversorgungsspannung, Fehler bei der Signalübertragung, Wandlungsfehler) kann bei Aktuatoren mit elektrisch kommutiertem Stellantrieb 200 mittels des beschriebenen Verfahrens die Steuerbarkeit (Positionierbarkeit) des Aktuators bzw. Stellglieds 300 aufrechterhalten werden. Tritt bei mehreren Sensoren 350 ein plötzlicher Sensortotalausfall ein (Ausfall aller Sensoren 350), bleibt durch schnelle Umschaltung auf den gesteuerten Betrieb des Stellantriebs 200 im Notlauf-Modus (hohe Amplitude A des Raumzeigers 260 in Richtung der ersten Achse 212) die Regelbarkeit erhalten. Somit kann basierend auf dem zuletzt adaptierten Zusammenhang zwischen Sensorsignal (Klappenposition bzw. Stellwinkel $\alpha$ oder translatorische Lage) und der Rotorlage bzw. der Lage der ersten Achse 212 des Rotors 210 der Aktuator bzw. das Stellglied 300 weiterhin mit hoher Genauigkeit positioniert bzw. verstellt werden. Prinzipiell kann mit dem Verfahren der normale Betrieb mit unterschiedlichen elektrischen Phasen $\phi_{el}$ aufrecht erhalten werden, d.h. das Stellglied 300 ist weiterhin differenziert steuerbar und nicht auf eine einzige vordefinierte Stellung festgelegt. Vielmehr ist dann unter der vordefinierten Stellung in jedem Takt der Steuerung die Stellung zu verstehen, die dem Wert der Stellwinkelvorgabe bzw. der Drehmomentsvorgabe aus dem Schritt 410 entspricht. Dies geht dann einher mit einer höheren Stromaufnahme des Stators 230 im nicht wirkungsgradoptimierten Betrieb.

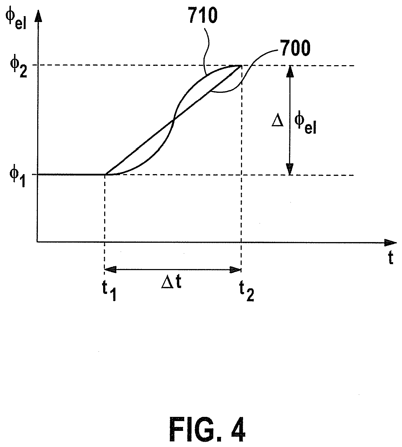

In Fig. 4 ist eine optimierte Trajektorienplanung dargestellt. Dabei ist auf der y-Achse die elektrische Phase $\phi_{el}$ des Raumzeigers 260 dargestellt und auf der x-Achse die Zeit. Man kann nun z.B. annehmen, dass bei einer ersten elektrischen Phase $\phi 1$ zu einem ersten Zeitpunkt t1 das definierte Ereignis, also beispielsweise ein Sensorausfall auftritt und zur Erreichung der vordefinierten Stellung des Stellglieds 300 eine zweite elektrische Phase von $\phi 2$ des Raumzeigers 260 notwendig ist, die in einer Zeit $\Delta t$ erreicht werden soll, beispielsweise in weniger als 300ms oder weniger als 100ms.

Dann könnte beim Umschalten vom Normalbetriebs-Modus auf den Notbetriebs-Modus die Steuerung die elektrische Phase prinzipiell einfach entlang einer Geraden (Linie 700 in Fig. 4) von der ersten elektrischen Phase $\phi 1$ zur zweiten elektrischen Phase $\phi 2$ mit konstanter Phasenänderungsgeschwindigkeit verfahren oder sogar einfach sprunghaft den Wert $\phi 2$ bereitstellen. Dabei besteht jedoch das Risiko, dass beim Übergang von einem Zustand vor dem ersten Zeitpunkt oder beim Übergang nach Erreichen der in der zweiten Phase nach dem zweiten Zeitpunkt t2 plötzliche und starke Beschleunigungen bzw. Abbremsungen auf die mechanischen Komponenten, also z.B. auf den Rotor 210 und das Stellglied 300 wirken. Dies rührt daher, dass der Rotor 210 ein gewisses Trägheitsmoment beim Beschleunigen bzw. beim Abbremsen gegenüber der sehr schnell möglichen Bestromung der Spulen 232 aufweist. Um eine derartige Belastung der mechanischen Komponenten des Rotors 210 und/oder des Stellglieds 300 zu verhindern kann ein Algorithmus zur Veränderung der elektrischen Phase $\phi_{el}$ des Raumzeigers 260 Anwendung finden, der dafür sorgt, dass bei der Änderung der elektrischen Phase von der ersten elektrischen Phase $\phi 1$ zur zweiten elektrischen Phase $\phi 2$ im Zeitablauf keine Unstetigkeiten auftreten. Dies ist in der S-förmig geschwungene Kurve 710 in Fig. 4 beispielhaft dargestellt, die zu jedem Zeitpunkt linksseitig und rechtsseitig differenzierbar ist. Hierbei wird nach Umschalten in einen Notbetriebs-Modus die elektrische Phase $\phi_{el}$ ausgehend von der ersten elektrischen Phase $\phi 1$ zunächst langsam verändert, um dann eine hohe Änderungsgeschwindigkeit zu erreichen, sobald der Rotor 210 mit seiner mechanischen Trägheit dem Raumzeiger 260 folgen kann. Gegen Ende der Verstellung der elektrischen Phase, also vor Erreichen der zweiten elektrischen Phase $\phi 2$ wird die Phasenänderungsgeschwindigkeit dann reduziert und immer stärker verlangsamt, so dass das Trägheitsmoment des Rotors 210 diesen nicht über die Zielstellung hinausdrehen kann. Ein derartiger Kurvenverlauf kann beispielsweise durch geeignete Filterung beispielsweise mit einem Tiefpass-Filter oder einem Bandpassfilter erreicht werden.

Ein derartiges Filterglied zur optimierten Trajektorienplanung in Form beispielsweise einer elektronischen Schaltung kann in den Flussdiagrammen der Figuren 3a und 3b beispielsweise zwischen dem Schritt 410 der Stellwinkelvorgabe $\alpha_{Soll}$ bzw. einer dazu proportionalen Drehmomentsvorgabe $T_{Soll}$ und der Steuerung 420 vorgesehen sein. Es kann alternativ oder zusätzlich zwischen dem Prüfschritt 450 und der Steuerung 420 vorgesehen sein.

Das Stellglied 300 kann beispielsweise drehbar gelagert sein, wie z.B. eine Drosselklappe. Ebensogut ist eine hier nicht dargestellte Ausführung möglich, bei welcher das Stellglied 300 eine translatorische Bewegung statt einer rotatorischen durchführt, wenn der Stellantrieb 200 angesteuert wird. So kann das Stellglied 300 z.B. als Waste-Gate-Aktuator ausgeführt sein. Ein translatorisch betriebenes Stellglied 300 kann abtriebsseitig eine Hubstange besitzen, die sich translatorisch bewegen lässt, beispielsweise in einem Bereich von z.B. 5mm bis 300mm, bevorzugt von 10mm bis 30mm. Für Waste-Gate-Aktuatoren ist ein derartiges translatorisches Stellglied 300 von der Bewegungsart her vorteilhaft. Es sind jedoch auch verschiedene andere Aktuatoren als Waste-Gate-Aktuatoren denkbar, für die eine translatorische Bewegung vorteilhaft ist.

Ebenso ist es denkbar, dass die Lageerkennung nicht durch einen Winkelsensor erfolgt, sondern dass ein Sensor die translatorische Lage erfasst, die dann mittels eines Kennfeldes oder einer Funktionalbeziehung auf die Rotorlage des Stellantriebs 200 umgerechnet wird, um so den Stellantrieb 200 zu kommutieren.

**Patentansprüche**

1. Verfahren zum Verstellen eines Stellglieds (300) eines Stellgebersystems (100) in eine vordefinierte Stellung entgegen einem Gegendrehmoment,

    -- wobei das Stellgebersystem (100) einen elektronisch kommutierten Stellantrieb (200) aufweist, der mit dem Stellglied (300) gekoppelt ist,
    -- wobei der Stellantrieb (200) einen permanentmagnetischen Rotor (210) aufweist, wobei der Rotor (210) eine erste Achse (212) aufweist, die sich entlang einer Polachse (290) des Rotors (210) erstreckt,

-- und wobei der Stellantrieb (200) einen elektronisch kommutierten Stator (230) aufweist,

-- wobei der Stator (230) mit einem Raumzeiger (260) bestrombar ist, wobei der Raumzeiger (260) eine elektrische Phase ($\phi_{el}$) und eine Amplitude (A) aufweist, wobei der Raumzeiger (260) bezüglich der ersten Achse (212) des Rotors (210) um eine Unterschieds-Phasenlage $\vartheta$ ausgerichtet wird,

**dadurch gekennzeichnet, dass**
das Verfahren folgende Schritte zur Ansteuerung einer vordefinierten Stellung des Stellglieds (300) aufweist:

-- Einstellen der Unterschiedsphasenlage ($\vartheta$) des Raumzeigers (260) auf eine Betriebs-Unterschiedsphasenlage ($\vartheta_O$),
-- Einstellen der Amplitude (A) auf eine Betriebs-Amplitude (Ao),
wobei die Betriebs-Unterschiedsphasenlage ($\vartheta_O$) und die Betriebs-Amplitude (Ao) derart eingestellt werden, dass die Betriebs-Unterschiedsphasenlage ($\vartheta_O$) weniger als 45° beträgt und dass ein zum Anfahren der vordefinierten Stellung des Stellglieds (300) geeignetes auf den Rotor (210) wirkendes Drehmoment erzeugt wird, um ein maximal auftretendes, auf den Rotor wirkende Gegendrehmoment zu überwinden, welches auf dem Weg von der Stellung des Stellglieds, bei welchem die Betriebs-Unterschiedsphasenlage eingestellt wird, zur vordefinierten Stellung des Stellglieds auftritt, wobei die Kombination aus Betriebs-Amplitude (Ao) und Betriebs-Unterschiedsphasenlage ($\vartheta_O$) dabei derart gewählt werden, dass auf dem gesamten Weg, der von der Stellung des Stellglieds (300), bei welcher die Betriebs-Unterschiedsphasenlage eingestellt wird, bis zur vordefinierten gewünschten Stellung des Stellglieds (300) zurückzulegen ist, vom Raumzeiger (260) ein größeres Drehmoment ($T_M$) ausgeübt wird als ein maximales auf dem Weg auftretendes Gegendrehmoment (Tc).

2. Verfahren nach Anspruch 1, **dadurch gekennzeichnet, dass** im Stellgebersystem (100) Mittel zur Erfassung eines Lagewerts (L) der Lage der ersten Achse (212) vorgesehen sind.

3. Verfahren nach Anspruch 2, **dadurch gekennzeichnet, dass** die Mittel wenigstens ein Kalibrierungsschritt zur Ermittlung eines Lagewerts (L) sind.

4. Verfahren nach einem der Ansprüche 1 bis 3, **dadurch gekennzeichnet, dass** bei der vordefinierten Stellung des Stellglieds (300) das Stellglied (300) vollständig geöffnet ist und/oder das Stellglied (300) an einem mechanischen Anschlag (380) zur Anlage kommt.

5. Verfahren nach einem der vorhergehenden Ansprüche, **dadurch gekennzeichnet, dass** das Anfahren der vordefinierten Stellung des Stellglieds (300) in weniger als 300ms, insbesondere in weniger als 100ms, erfolgt.

6. Verfahren nach einem der vorhergehenden Ansprüche, **dadurch gekennzeichnet, dass** die Ansteuerung für die Drehung der elektrischen Phase ($\phi_{el}$) des Raumzeigers (260) derart erfolgt, dass die Darstellung der Phasenansteuerwerte über der Ansteuerzeit eine zu jedem Zeitpunkt differenzierbare Kurve ergibt, also insbesondere die linksseitige Ableitung zu jedem Zeitpunkt mit der rechtsseitigen Ableitung übereinstimmt.

7. Verfahren nach einem der Ansprüche 1 bis 6, **dadurch gekennzeichnet, dass** das Verfahren nur nach Eintritt eines definierten Ereignisses durchgeführt wird, wobei ohne Eintritt des definierten Ereignisses für das Verstellen der Stellung des Stellglieds (300) der Raumzeiger (260) bezüglich der ersten Achse (212) des Rotors (210) um eine Unterschieds-Phasenlage ($\vartheta$) ausgerichtet wird, die in einem Bereich zwischen 45° und 135° liegt, insbesondere in einem Bereich von 70° bis 110°.

8. Verfahren nach Anspruch 2 und Anspruch 7, **dadurch gekennzeichnet, dass** die Mittel zur Erfassung eines Lagewerts (L) der Lage der ersten Achse (212) wenigstens ein am Stellglied (300) angeordneter Sensor (350) und/oder wenigstens ein am Stellantrieb (200) angeordneter Sensor (350) sind.

9. Verfahren nach einem der Ansprüche 7 oder 8, **dadurch gekennzeichnet, dass** im Stellgebersystem (100) ein Speicher (480) zur Speicherung von Lagewerten (L) der Lage der ersten Achse (212) vorgesehen ist und dass bei Eintreten des definierten Ereignisses ein Lagewert (L) aus dem Speicher (480) abgerufen wird, um die Betriebs-Unterschiedsphasenlage ($\vartheta_O$) einzustellen.

10. Verfahren nach einem der Ansprüche 8 oder 9, **dadurch gekennzeichnet, dass** das definierte Ereignis eine Fehlfunktion des Sensors (350) oder der Ausfall des Sensors (350) ist.

11. Verfahren nach einem der Ansprüche 9 oder 10, **dadurch gekennzeichnet, dass** die vordefinierte Stellung des Stellglieds (300) eine Stellung ist, bei der das Stellglied (300) an einem mechanischen Anschlag (380) zur Anlage kommt, wobei ein Differenz-

Phasenwinkel ($\Delta\phi$) der elektrischen Phase ($\phi_{el}$) des Raumzeigers 260 sich aus der Differenz einer ersten elektrischen Phase ($\phi$1) des Raumzeigers (260) an der vordefinierten Stellung und einer zweiten elektrischen Phase ($\phi$2) des Raumzeigers (260) ergibt, die der Raumzeiger (260) bei dem aus dem Speicher (480) abgerufenen Lagewert (L) aufweist zuzüglich eines Vielfachen von 360°, insbesondere zuzüglich 720°.

12. Vorrichtung zum Verstellen eines Stellglieds (300) eines Stellgebersystems (100) in eine vordefinierte Stellung entgegen einem Gegendrehmoment,

-- wobei das Stellgebersystem (100) einen elektronisch kommutierten Stellantrieb (200) aufweist, der mit dem Stellglied (300) gekoppelt ist,
-- wobei der Stellantrieb (200) einen permanentmagnetischen Rotor (210) aufweist, wobei der Rotor (210) eine erste Achse (212) aufweist, die sich entlang einer Polachse (290) des Rotors (210) erstreckt,
-- und wobei der Stellantrieb (200) einen elektronisch kommutierten Stator (230) aufweist,
-- wobei der Stator (230) mit einem Raumzeiger (260) bestrombar ist, wobei der Raumzeiger (260) eine elektrische Phase ($\phi_{el}$) und eine Amplitude (A) aufweist, wobei der Raumzeiger (260) bezüglich der ersten Achse (212) des Rotors (210) um eine Unterschieds-Phasenlage ($\vartheta$) ausrichtbar ist,

**dadurch gekennzeichnet, dass**

die Vorrichtung ausgebildet ist, eine vordefinierten Stellung des Stellglieds (300) anzufahren, indem:

-- der Raumzeiger (260) so ansteuerbar ist, dass die Unterschiedsphasenlage ($\vartheta$) auf eine Betriebs-Unterschiedsphasenlage ($\vartheta_O$) einstellbar ist,
-- wobei der Raumzeigers (260) so ansteuerbar ist, dass die Amplitude (A) auf eine Betriebs-Amplitude (Ao) einstellbar ist,
-- wobei die Betriebs-Unterschiedsphasenlage ($\vartheta_O$) und die Betriebs-Amplitude (Ao) derart einstellbar sind, dass die Betriebs-Unterschiedsphasenlage ($\vartheta_O$) weniger als 45° beträgt und dass der Raumzeiger ein zum Anfahren der vordefinierten Stellung des Stellglieds (300) geeignetes auf den Rotor (210) wirkendes Drehmoment erzeugt, um ein maximal auftretendes, auf den Rotor wirkende Gegendrehmoment zu überwinden, welches auf dem Weg von der Stellung des Stellglieds, bei welchem die Betriebs-Unterschiedsphasenlage eingestellt wird, zur vordefinierten Stellung des Stellglieds auftritt, wobei die Kombination aus Betriebs-Amplitude (Ao) und Betriebs-Unterschiedsphasenlage ($\vartheta_O$) dabei derart gewählt werden, dass auf dem gesamten Weg, der von der Stellung des Stellglieds (300), bei welcher die Betriebs-Unterschiedsphasenlage eingestellt wird, bis zur vordefinierten gewünschten Stellung des Stellglieds (300) zurückzulegen ist, vom Raumzeiger (260) ein größeres Drehmoment ($T_M$) ausgeübt wird als ein maximales auf dem Weg auftretendes Gegendrehmoment (Tc)..

13. Vorrichtung nach Anspruch 12, **dadurch gekennzeichnet, dass**

-- die Vorrichtung ausgebildet ist, in einem Normalbetriebszustand eine vordefinierte Stellung des Stellglieds (300) anzufahren, indem
-- der Raumzeiger (260) bezüglich der ersten Achse (212) des Rotors (210) um eine Unterschieds-Phasenlage ($\vartheta$) von mehr als 45° ausrichtbar ist, insbesondere um eine Unterschiedsphasenlage ($\vartheta$) von mehr als 70°,
-- wobei die Amplitude (A) derart einstellbar ist, dass der Raumzeiger ein zum Anfahren der vordefinierten Stellung geeignetes auf den Rotor (210) wirkendes Drehmoment erzeugt,
-- und dass die Vorrichtung weiterhin ausgebildet ist, nur nach Eintritt eines definierten Ereignisses die vordefinierte Stellung des Stellglieds (300) anzufahren, indem
-- die Betriebs-Unterschiedsphasenlage ($\vartheta_O$) und die Betriebs-Amplitude (Ao) derart einstellbar sind, dass die Betriebs-Unterschiedsphasenlage ($\vartheta_O$) weniger als 45° beträgt und dass der Raumzeiger ein zum Anfahren der vordefinierten Stellung geeignetes auf den Rotor (210) wirkendes Drehmoment erzeugt

14. Vorrichtung nach Anspruch 13, **dadurch gekennzeichnet, dass** im Stellgebersystem (100) Mittel zur Erfassung eines Lagewerts (L) der Lage der ersten Achse (212) vorgesehen sind,

wobei die Mittel zur Erfassung des Lagewerts (L) wenigstens ein am Stellglied (300) angeordneter Sensor (350) und/oder wenigstens ein am Stellantrieb (200) angeordneter Sensor (350) sind,
wobei im Stellgebersystem (100) ein Speicher (480) zur Speicherung von Lagewerten (L) der Lage der ersten Achse (212) vorgesehen ist und wobei bei Eintreten des definierten Ereignisses ein Lagewert (L) aus dem Speicher (480) abgerufen wird, um die Betriebs-Unterschiedsphasenlage ($\vartheta_O$) einzustellen,
und wobei das definierte Ereignis eine Fehlfunktion des Sensors (350) oder der Ausfall des Sensors (350) ist.

15. Computerprogrammprodukt, das einen Programmcode enthält, der, wenn er auf einer Datenverarbeitungseinheit ausgeführt wird, das Verfahren nach einem der Ansprüche 1 bis 11 durchführt.

## Claims

1. Method for adjusting an actuator (300) of a positioning system (100) into a predefined position against a counter-torque,

    - wherein the positioning system (100) has an electronically commutated actuator drive (200) which is coupled to the actuator (300),
    - wherein the actuator drive (200) has a rotor (210) with permanent magnets, wherein the rotor (210) has a first axis (212) which extends along a pole axis (290) of the rotor (210),
    - and wherein the actuator drive (200) has an electronically commutated stator (230),
    - wherein the stator (230) can be energized by a space phasor (260), wherein the space phasor (260) has an electric phase ($\phi_{el}$) and an amplitude (A), wherein the space phasor (260) is oriented about a differential phasing $\vartheta$ relative to the first axis (212) of the rotor (210),

    **characterized in that**
    the method comprises the following steps for controlling a predefined position of the actuator (300):

    - setting the differential phasing ($\vartheta$) of the space phasor (260) to an operating differential phasing ($\vartheta_O$),
    - setting the amplitude to an operating amplitude ($A_O$),

    wherein the operating differential phasing ($\vartheta_O$) and the operating amplitude ($A_O$) are set such that the operating differential phasing ($\vartheta_O$) is less than 45°, and that a torque is generated which acts on the rotor (210) and is suitable for approaching the predefined position of the actuator (300), such as to overcome a counter-torque which occurs maximally and acts onto the rotor, which counter-torque occurs on the path from the position of the actuator, at which the operating differential phasing ist set, to the predefined position of the actuator, wherein the combination including the operating amplitude ($A_O$) and the operating differential phasing ($\vartheta_O$) are selected such that, on the entire path which is to be travelled from the position of the actuator (300) at which the operating differential phasing is set to the predefined position of the actuator, a larger torque ($T_M$) is exerted by the space phasor (260) than a counter-torque ($T_C$) maximally occuring on the path.

2. Method according to claim 1, **characterized in that** the positioning system (100) comprises means for detecting a position value (L) of the position of the first axis (212).

3. Method according to claim 2, **characterized in that** the means are at least one calibration step for determining a position value (L).

4. Method according to any of claims 1 to 3, **characterized in that** at the predefined position of the actuator (300), the actuator (300) is fully opened and/or the actuator (300) comes to rest on a mechanical stop (380).

5. Method according to any of the preceding claims, **characterized in that** the predefined position of the actuator (300) is reached in less than 300 ms, in particular in less than 100 ms.

6. Method according to any of the preceding claims, **characterized in that** the control for rotating the electrical phase ($\phi_{el}$) of the space phasor (260) takes place such that the depiction of the phase control values over the control time gives a curve which can be differentiated at any point in time, i.e. in particular the left-side derivative at any point in time corresponds to the right-side derivative.

7. Method according to any of claims 1 to 6, **characterized in that** the method is performed only after the occurrence of a defined event, wherein without the occurrence of the defined event for adjusting the position of the actuator (300), the space phasor (260) is oriented relative to the first axis (212) of the rotor (210) by a differential phasing ($\vartheta$) which lies in a range between 45° and 135°, in particular in a range from 70° to 110°.

8. Method according to claim 2 and claim 7, **characterized in that** the means for detecting a position value (L) of the position of the first axis (212) are at least one sensor (350) arranged on the actuator (300) and/or at least one sensor (350) arranged on the actuator drive (200).

9. Method according to any of claims 7 or 8, **characterized in that** the positioning system (100) comprises a memory (480) for storing position values (L) of the position of the first axis (212), and that on occurrence of a defined event, a position value (L) is retrieved from the memory (480) in order to set the operating phase difference ($\vartheta_O$).

10. Method according to one of claims 8 or 9, **charac-**

**terized in that** the defined event is a malfunction of the sensor (350) or the failure of the sensor (350).

11. Method according to one of claims 9 or 10, **characterized in that** the predefined position of the actuator (300) is a position in which the actuator (300) comes to rest on a mechanical stop (380), wherein a differential phase angle ($\Delta\phi$) of the electrical phase ($\phi_{el}$) of the space phasor (260) results from the difference between a first electrical phase ($\phi1$) of the space phasor (260) at the predefined position, and a second electrical phase ($\phi2$) of the space phasor (260) which the space phasor (260) has at the position value (L) retrieved from the memory (480) plus a multiple of 360°, in particular plus 720°.

12. Device for adjusting an actuator (300) of a positioning system (100) into a predefined position against a counter-torque,

- wherein the positioning system (100) has an electronically commutated actuator drive (200) which is coupled to the actuator (300),
- wherein the actuator drive (200) has a rotor (210) with permanent magnets, wherein the rotor (210) has a first axis (212) which extends along a pole axis (290) of the rotor (210),
- and wherein the actuator drive (200) has an electronically commutated stator (230),
- wherein the stator (230) can be energized with a space phasor (260), wherein the space phasor (260) has an electrical phase ($\phi_{el}$) and an amplitude (A), wherein the space phasor (260) can be oriented about a differential phasing ($\vartheta$) relative to the first axis (212) of the rotor (210),

**characterized in that** the device is configured to approach a predefined position of the actuator (300) **in that**:

- the space phasor (260) can be controlled such that the differential phasing ($\vartheta$) can be set to an operating differential phasing ($\vartheta_O$),
- wherein the space phasor (260) can be controlled such that the amplitude (A) can be set to an operating amplitude ($A_O$),
- wherein the operating differential phasing ($\vartheta_O$) and the operating amplitude ($A_O$) can be set such that the operating differential phasing ($\vartheta_O$) is less than 45°, and the space phasor generates a torque acting on the rotor (210) and suitable for approaching a predefined position of the actuator (300), such as to overcome a counter-torque which occurs maximally and acts onto the rotor, which counter-torque occurs on the path from the position of the actuator, at which the operating differential phasing ist set, to the predefined position of the actuator, wherein the combination including the operating amplitude ($A_O$) and the operating differential phasing ($\vartheta_O$) are selected such that, on the entire path which is to be travelled from the position of the actuator (300) at which the operating differential phasing is set to the predefined position of the actuator, a larger torque ($T_M$) is exerted by the space phasor (260) than a counter-torque ($T_C$) maximally occuring on the path.

13. Device according to claim 12, **characterized in that**

- the device is configured to approach a predefined position of the actuator (300) in a normal operating mode, **in that**
- the space phasor (260) can be oriented relative to the first axis (212) of the rotor (210) about a differential phasing ($\vartheta$) of more than 45°, in particular about a differential phasing ($\vartheta$) of more than 70°,
- wherein the amplitude (A) can be set such that the space phasor generates a torque acting on the rotor (210) and suitable for approaching a predefined position,
- and that the device is furthermore configured to approach the predefined position of the actuator (300) only after occurrence of a defined event, **in that**
- the operating differential phasing ($\vartheta_O$) and the operating amplitude ($A_O$) can be set such that the operating differential phasing ($\vartheta_O$) is less than 45°, and that the space phasor generates a torque acting on the rotor (210) and suitable for approaching the predefined position.

14. Device according to claim 13, **characterized in that** the positioning system (100) comprises means for detecting a position value (L) of the position of the first axis (212), wherein the means for detecting the position value (L) comprise at least one sensor (350) arranged on the actuator (300) and/or at least one sensor (350) arranged on the actuator drive (200), wherein the positioning system (100) comprises a memory (480) for storing position values (L) of the position of the first axis (212) , and wherein on occurrence of the defined event, a position value (L) is retrieved from the memory (480) in order to set the operating differential phasing ($\vartheta_O$), and wherein the defined event is a malfunction of the sensor (350) or the failure of the sensor (350).

15. Computer program product which contains a program code which, if executed on a data processing unit, performs the method according to any of claims 1 to 11.

## Revendications

1. Procédé pour déplacer un actionneur (300) d'un système de capteur de réglage (100) dans une position prédéfinie à l'encontre d'un couple antagoniste,

   - le système de capteur de réglage (100) présentant un servomoteur à commutation électronique (200), qui est couplé à l'actionneur (300),
   - le servomoteur (200) présentant un rotor à aimant permanent (210), le rotor (210) présentant un premier axe (212) qui s'étend le long d'un axe polaire (290) du rotor (210),
   - et le servomoteur (200) présentant un stator à commutation électronique (230),
   - le stator (230) pouvant être alimenté par un vecteur spatial (260), le vecteur spatial (260) présentant une phase électrique ($\phi_{el}$) et une amplitude (A), le vecteur spatial (260) étant orienté d'une position de phase différentielle $\vartheta$ par rapport au premier axe (212) du rotor (210),

   **caractérisé en ce que**
   le procédé présente les étapes suivantes pour commander une position prédéfinie de l'actionneur (300) :

   - réglage de la position de phase différentielle ($\vartheta$) du vecteur spatial (260) sur une position de phase différentielle de fonctionnement ($\vartheta_O$),
   - réglage de l'amplitude (A) sur une amplitude de fonctionnement ($A_O$),

   la position de phase différentielle de fonctionnement ($\vartheta_O$) et l'amplitude de fonctionnement ($A_O$) étant réglées de telle sorte que la position de phase différentielle de fonctionnement ($\vartheta_O$) soit inférieure à 45° et qu'un couple agissant sur le rotor (210) approprié pour atteindre la position prédéfinie de l'actionneur (300) soit généré, afin de surmonter un couple antagoniste maximal agissant sur le rotor qui apparaît sur le trajet entre la position de l'actionneur, à laquelle la position de phase différentielle de fonctionnement est réglée, et la position prédéfinie de l'actionneur, la combinaison de l'amplitude de fonctionnement ($A_O$) et de la position de phase différentielle de fonctionnement ($\vartheta_O$) étant choisie de telle sorte que, sur la totalité du trajet à parcourir entre la position de l'actionneur (300), à laquelle la position de phase différentielle de fonctionnement est réglée, et la position souhaitée prédéfinie de l'actionneur (300), un couple ($T_M$) supérieur à un couple antagoniste maximal ($T_C$) apparaissant sur le trajet soit exercé par le vecteur spatial (260).

2. Procédé selon la revendication 1, **caractérisé en ce que** des moyens pour détecter une valeur de position (L) de la position du premier axe (212) sont prévus dans le système de capteur de réglage (100).

3. Procédé selon la revendication 2, **caractérisé en ce que** les moyens sont au moins une étape de calibrage pour déterminer une valeur de position (L).

4. Procédé selon l'une des revendications 1 à 3, **caractérisé en ce que**, dans la position prédéfinie de l'actionneur (300), l'actionneur (300) est complètement ouvert et/ou l'actionneur (300) vient en appui contre une butée mécanique (380).

5. Procédé selon l'une des revendications précédentes, **caractérisé en ce que** la position prédéfinie de l'actionneur (300) est atteinte en moins de 300 ms, en particulier en moins de 100 ms.

6. Procédé selon l'une des revendications précédentes, **caractérisé en ce que** la commande de la rotation de la phase électrique ($\phi_{el}$) du vecteur spatial (260) est effectuée de telle sorte que la représentation des valeurs de commande de phase sur la durée de commande donne une courbe différentiable à chaque instant, c'est-à-dire en particulier que la dérivée à gauche coïncide à chaque instant avec la dérivée à droite.

7. Procédé selon l'une des revendications 1 à 6, **caractérisé en ce que** le procédé n'est mis en œuvre qu'après la survenue d'un événement défini, dans lequel, sans survenue de l'événement défini, pour le déplacement de la position de l'actionneur (300), le vecteur spatial (260) est orienté par rapport au premier axe (212) du rotor (210) d'une position de phase différentielle ($\vartheta$) qui se situe dans une plage comprise entre 45° et 135°, en particulier dans une plage comprise entre 70° et 110°.

8. Procédé selon la revendication 2 et la revendication 7, **caractérisé en ce que** les moyens pour détecter une valeur de position (L) de la position du premier axe (212) sont au moins un capteur (350) disposé sur l'actionneur (300) et/ou au moins un capteur (350) disposé sur le servomoteur (200).

9. Procédé selon l'une des revendications 7 ou 8, **caractérisé en ce qu'**une mémoire (480) est prévue dans le système de capteur de réglage (100) pour mémoriser des valeurs de position (L) de la position du premier axe (212) et **en ce que**, lorsque l'événement défini survient, une valeur de position (L) est appelée dans la mémoire (480) pour régler la position de phase différentielle de fonctionnement ($\vartheta_O$).

10. Procédé selon l'une des revendications 8 ou 9, **caractérisé en ce que** l'événement défini est un dysfonctionnement du capteur (350) ou la défaillance du capteur (350).

**11.** Procédé selon l'une des revendications 9 ou 10, **caractérisé en ce que** la position prédéfinie de l'actionneur (300) est une position dans laquelle l'actionneur (300) vient en appui contre une butée mécanique (380), un angle de phase différentiel ($\Delta\phi$) de la phase électrique ($\phi_{el}$) du vecteur spatial (260) résultant de la différence entre une première phase électrique ($\phi1$) du vecteur spatial (260) à la position prédéfinie et une deuxième phase électrique ($\phi2$) du vecteur spatial (260) que présente le vecteur spatial (260) à la valeur de position (L) appelée dans la mémoire (480) plus un multiple de 360°, en particulier plus 720°.

**12.** Dispositif pour déplacer un actionneur (300) d'un système de capteur de réglage (100) dans une position prédéfinie à l'encontre d'un couple antagoniste,

- le système de capteur de réglage (100) présentant un servomoteur à commutation électronique (200), qui est couplé à l'actionneur (300),
- le servomoteur (200) présentant un rotor à aimant permanent (210), le rotor (210) présentant un premier axe (212) qui s'étend le long d'un axe polaire (290) du rotor (210),
- et le servomoteur (200) présentant un stator à commutation électronique (230),
- le stator (230) pouvant être alimenté par un vecteur spatial (260), le vecteur spatial (260) présentant une phase électrique ($\phi_{el}$) et une amplitude (A), le vecteur spatial (260) étant orienté d'une position de phase différentielle ($\vartheta$) par rapport au premier axe (212) du rotor (210),

**caractérisé en ce que**
le dispositif est conçu pour atteindre une position prédéfinie de l'actionneur (300) par le fait que :

- le vecteur spatial (260) peut être commandé de telle sorte que la position de phase différentielle ($\vartheta$) puisse être réglée sur une position de phase différentielle de fonctionnement ($\vartheta_O$),
- le vecteur spatial (260) pouvant être commandé de telle sorte que l'amplitude (A) puisse être réglée sur une amplitude de fonctionnement ($A_O$),
- la position de phase différentielle de fonctionnement ($\vartheta_O$) et l'amplitude de fonctionnement ($A_O$) étant réglables de telle sorte que la position de phase différentielle de fonctionnement ($\vartheta_O$) soit inférieure à 45° et que le vecteur spatial génère un couple agissant sur le rotor (210) approprié pour atteindre la position prédéfinie de l'actionneur (300), afin de surmonter un couple antagoniste maximal agissant sur le rotor, qui apparaît sur le trajet entre la position de l'actionneur, à laquelle la position de phase différentielle de fonctionnement est réglée, et la position prédéfinie de l'actionneur, la combinaison de l'amplitude de fonctionnement ($A_O$) et de la position de phase différentielle de fonctionnement ($\vartheta_O$) étant choisie de telle sorte que, sur la totalité du trajet à parcourir entre la position de l'actionneur (300), à laquelle la position de phase différentielle de fonctionnement est réglée, et la position souhaitée prédéfinie de l'actionneur (300), un couple ($T_M$) supérieur à un couple antagoniste maximal ($T_C$) apparaissant sur le trajet soit exercé par le vecteur spatial (260).

**13.** Dispositif selon la revendication 12, **caractérisé en ce que**

- le dispositif est conçu pour atteindre, dans un état de fonctionnement normal, une position prédéfinie de l'actionneur (300), par le fait que
- le vecteur spatial (260) peut être orienté par rapport au premier axe (212) du rotor (210) d'une position de phase différentielle ($\vartheta$) supérieure à 45°, en particulier d'une position de phase différentielle ($\vartheta$) supérieure à 70°,
- l'amplitude (A) étant réglable de telle sorte que le vecteur spatial génère un couple de rotation agissant sur le rotor (210) approprié pour atteindre la position prédéfinie,
- et **en ce que** le dispositif est en outre conçu pour n'atteindre la position prédéfinie de l'actionneur (300) qu'après la survenue d'un événement défini, par le fait que
- la position de phase différentielle de fonctionnement ($\vartheta_O$) et l'amplitude de fonctionnement ($A_O$) sont réglables de telle sorte que la position de phase différentielle de fonctionnement ($\vartheta_O$) soit inférieure à 45° et que le vecteur spatial génère un couple agissant sur le rotor (210) approprié pour atteindre la position prédéfinie.

**14.** Dispositif selon la revendication 13, **caractérisé en ce que** des moyens pour détecter une valeur de position (L) de la position du premier axe (212) sont prévus dans le système de capteur de réglage (100),

les moyens pour détecter la valeur de position (L) étant au moins un capteur (350) disposé sur l'actionneur (300) et/ou au moins un capteur (350) disposé sur le servomoteur (200), une mémoire (480) étant prévue dans le système de capteur de réglage (100) pour mémoriser des valeurs de position (L) de la position du premier axe (212) et une valeur de position (L) étant appelée dans la mémoire (480) lorsque l'événement défini survient, afin de régler la position de phase différentielle de fonctionnement ($\vartheta_O$), et l'événement défini étant un dysfonctionnement du capteur (350) ou la défaillance du capteur (350).

**15.** Produit programme d'ordinateur comprenant un code de programme qui, lorsqu'il est exécuté sur une unité de traitement de données, met en œuvre le procédé selon l'une des revendications 1 à 11.

**FIG. 1a**

FIG. 1b

FIG. 2

FIG. 3a

FIG. 3b

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011005566 A1
- EP 1555748 A2
- DE 10197212 T5
- DE 102011005774 A1
- DE 102011118172 A1